(19) **Europäisches Patentamt European Patent Office Office européen des brevets**

(11) **EP 4 708 520 A1**

(12) **EUROPEAN PATENT APPLICATION**
published in accordance with Art. 153(4) EPC

(43) Date of publication:
**11.03.2026 Bulletin 2026/11**

(21) Application number: **24897968.4**

(22) Date of filing: **15.11.2024**

(51) International Patent Classification (IPC):
**H01M 50/262** (2021.01)      **H01M 50/251** (2021.01)
**H01M 50/204** (2021.01)

(52) Cooperative Patent Classification (CPC):
**H01M 10/613; H01M 10/663; H01M 50/204;**
**H01M 50/209; H01M 50/251; H01M 50/262;**
**H01M 50/298;** H01M 2220/10; Y02E 60/10

(86) International application number:
**PCT/KR2024/018038**

(87) International publication number:
**WO 2025/116372 (05.06.2025 Gazette 2025/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **01.12.2023  KR 20230172422**
**14.11.2024  KR 20240161894**

(71) Applicant: **LG Energy Solution, Ltd.**
**Seoul 07335 (KR)**

(72) Inventors:
• **SON, Kown**
  **Daejeon 34122 (KR)**
• **JUNG, Goansu**
  **Daejeon 34122 (KR)**
• **KIM, Myoungsic**
  **Daejeon 34122 (KR)**
• **KIM, Heechan**
  **Daejeon 34122 (KR)**
• **LEE, Seungjun**
  **Daejeon 34122 (KR)**

(74) Representative: **BCKIP Part mbB**
**Landsberger Straße 98**
**80339 München (DE)**

(54) **BATTERY ENCLOSURE AND ENERGY STORAGE SYSTEM INCLUDING SAME**

(57)    A battery enclosure according to an embodiment of the present disclosure includes an enclosure including a base fixed to an installation surface, and a battery rack that accommodates at least one battery and is fixed to the base. The battery rack includes at least one vertically extending column, the base includes at least one horizontal beam and at least one vertical beam. The horizontal beam includes a fixture that fixes the battery enclosure to the installation surface, and the fixture is provided at a position corresponding to a position of the column included in the battery rack.

[FIG. 2]

**EP 4 708 520 A1**

**Description**

**[TECHNICAL FIELD]**

Cross-Reference to Related Application(s)

This application claims priority to and the benefit of Korean Patent Application no. KR10-2023-0172422, filed on December 1, 2023, and Korean Patent Application no. KR10-2024-0161894, filed on November 14, 2024, the entire contents of which are incorporated herein by reference.

The present disclosure relates to a battery enclosure and an energy storage system including the same.

**[BACKGROUND ART]**

In recent years, as issues such as power shortages and environmentally friendly energy have come to surface, energy storage systems (ESS) for storing generated power are attracting a lot of attention. Typically, the use of such an ESS makes it easy to build a power management system such as a smart grid system, so that power supply and demand can be easily adjusted in specific regions or cities. In addition, as the commercialization of electric vehicles is in full scale, this ESS can be applied to electric charging stations where electric vehicles can be charged.

ESS can be configured in a variety of forms, but typically, it can be configured in a form that includes one or more enclosures. The enclosure may be in a state in which a plurality of battery modules or battery packs (hereinafter referred to as batteries) are located, and a plurality of batteries are connected with each other in series and/or in parallel.

For example, the ESS including two or more enclosures is disclosed in the prior art literature (Korean Unexamined Patent Publication no. KR 10-2023-0112086).

**[DETAILED DESCRIPTION OF THE INVENTION]**

**[Technical Problem]**

It is an object of the present disclosure to provide a battery enclosure that achieves optimization of internal space and thus has a compact structure, and an energy storage system including the same.

It is another object of the present disclosure to provide a battery enclosure that simplifies an installation process and ensures earthquake resistance, and an energy storage system including the same.

However, the technical objects solved by the embodiments of the present disclosure are not limited to those mentioned above, and may be expanded in various ways within the scope of the technical idea included in the present disclosure.

**[Technical Solution]**

According to certain aspects of the present disclosure, there is provided a battery enclosure, comprising: an enclosure including a base that is fixed to an installation surface; and a battery rack fixed to the base and configured to accommodate at least one battery. The battery rack includes at least one column extending in a vertical direction, the base includes at least one horizontal beam and at least one vertical beam, the horizontal beam includes a fixture provided at a position corresponding to a position of the column included in the battery rack and configured to fix the battery enclosure to the installation surface.

A single fixture may be provided on the horizontal beam.

The fixture provided on the horizontal beam may be positioned apart from a center of the horizontal beam in a length direction.

The fixture may further include a middle fixture provided on the horizontal beam and a corner fixture positioned adjacent to an end of the horizontal beam or an end of the vertical beam.

Multiple corner fixtures may be provided, and the middle fixture may be positioned between two corner fixtures.

The middle fixture may be positioned closer to one of the two corner fixtures than to another one.

The battery rack may include multiple columns in which batteries are vertically stacked.

The middle fixture may include a bottom surface in which a hole is formed, and a support surface extending from an edge of the bottom surface to the horizontal beam.

The corner fixture may include a bottom surface in which a hole is formed, and an edge of the bottom surface is positioned adjacent to the horizontal beam or the vertical beam.

The base may include a rack fixing beam positioned between two horizontal beams, and the column may be fixed to the rack fixing beam.

A sub-vertical beam may be positioned below the rack fixing beam, and the sub-vertical beam may be disposed perpendicular to the horizontal beam.

The horizontal beam may include a partition formed therein.

The base may further include a sub-vertical beam disposed perpendicular to the horizontal beam, and both ends of the sub-vertical beam may be in contact with the partition of the horizontal beam.

The battery enclosure may further include a control panel configured to manage the battery rack, and the front surface of the control panel may be disposed perpendicular to the front surface of the battery rack.

The battery enclosure may further include an air conditioner configured to dissipate heat from the at least one battery, and the air conditioner may be provided in a state coupled to a door installed on the front surface of the battery rack to allow access to the battery rack.

A cable may be installed in the battery enclosure as a conductive member for electrical connection.

According to certain other aspects of the present disclosure, there is provided an energy storage system comprising the above-mentioned battery enclosure.

**[Advantageous Effects]**

According to certain embodiments, by changing the arrangement of the internal configuration, it is possible to minimize a dead space, thereby improving the space efficiency of a battery enclosure and an energy storage system including the same.

In addition, according to certain embodiments, the power distribution structure for providing power to the battery enclosure is changed, and the number of anchors for fixing the battery enclosure to the installation location is minimized, thereby improving the ease of installation and making the installation operation easy and simple.

The effects of the present disclosure are not limited to the effects mentioned above, and additional other effects not described above will be clearly understood from the description of the appended claims by those skilled in the art.

**[BRIEF DESCRIPTION OF THE DRAWING]**

FIG. 1 is a schematic block diagram of an energy storage system according to certain embodiments of the present disclosure.

FIG. 2 is a perspective view of a battery enclosure according to certain embodiments of the present disclosure.

FIG. 3 is a side view of a battery enclosure according to certain embodiments of the present disclosure.

FIG. 4 is another side view of a battery enclosure according to certain embodiments of the present disclosure.

FIG. 5 is a front view of a battery enclosure according to certain embodiments of the present disclosure.

FIG. 6 is a front view showing a state in which some components are omitted from the battery enclosure according to FIG. 2.

FIG. 7 is a perspective view of an air conditioner included in the battery enclosure according to FIG. 2.

FIG. 8 is a cross-sectional view taken along line A-A of FIG. 2.

FIG. 9 is a perspective view of the base of the enclosure included in the battery enclosure according to FIG. 2.

FIG. 10 is a cross-sectional view taken along line B-B of FIG. 9.

FIG. 11 is an enlarged view of a section C1 of FIG. 9.

FIG. 12 is an enlarged view of a section C2 of FIG. 9.

FIG. 13 is a perspective view of a battery rack included in a battery enclosure according to FIG. 2.

FIG. 14 is a diagram for explaining the position of a fixing part in a battery enclosure according to FIG. 2.

FIG. 15 is a diagram for explaining the arrangement of the battery enclosure when the battery enclosure according to FIG. 2 is formed in a plural number.

FIG. 16 is a diagram showing modified embodiments of a base included in a battery enclosure according to FIG. 2.

FIGS. 17 to 19 are diagrams for explaining an electrical connection structure inside a battery enclosure according to certain embodiments of the present disclosure.

FIG. 20 is a diagram for explaining an electrical connection structure of an energy storage system according to certain embodiments of the present disclosure.

FIG. 21 is an enlarged view of one side of an enclosure included in the battery enclosure according to FIG. 2.

FIGS. 22 and 23 are exploded perspective views of a closing unit for closing an opening of a battery enclosure according to FIG. 2.

FIG. 24 is a modified embodiment of the closing unit according to FIG. 23.

FIG. 25 is a diagram comparing the connection between battery enclosures according to certain embodiments of the present disclosure with the prior art.

**[DETAILED DESCRIPTION OF THE EMBODIMENTS]**

Hereinafter, with reference to the accompanying drawings, various embodiments of the present disclosure will be described in detail to the extent that one of ordinary skill in the art can easily practice the present disclosure. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Since the drawings arbitrarily illustrate the dimension and thickness of each component for the convenience of description, the present disclosure is not necessarily limited to that illustrated. The drawings depict the thickness in an enlarged scale to clearly show different layers and regions. Further, the drawings exaggerate the thickness of a certain layer or region to facilitate the description thereof.

When a layer, film, region, plate or the like is arranged "on" a specific part, the description includes not only a case where the layer, film, region, plate or the like is arranged "directly on" the specific part, but also a case where the layer, film, region, plate or the like is arranged on the specific part via another part. When a part is arranged "directly on" another part, this indicates that no new component is present between the two parts. Further, when a component is arranged "on" a reference part, this indicates that the component is present at the top of or under the reference part, and does not necessarily indicate that the component is arranged only at the top of the reference part, which is opposite to the direction of gravity.

Throughout the descriptions herein, when a certain part "includes" a component, this does not indicate that the certain part excludes other components, but indicates that the part may further include other components, unless otherwise defined.

Throughout the descriptions herein, the terms "in a plan view" indicate viewing an object from above, and the terms "in a cross-sectional view" indicate viewing a vertical cross section of an object from side.

A battery pack positioned inside the enclosure of an energy storage system (ESS) is mounted on, for example, a rack frame. Thus, when the enclosure or the rack frame moves due to external impact or vibration, there is a problem in that the battery pack may be detached from the rack frame or the battery pack may be damaged. Therefore, the enclosure has been required to be stably fixed to the installation site, which may result in an increase in the number of anchors that fix the enclosure to the ground. However, when the number of anchors is unnecessarily increased to stably fix the enclosure to the ground, there is a problem in that the complexity of the installation work and the installation time increase.

An ESS may include two or more enclosures, and these enclosures may be electrically connected to each other to receive power. However, a power distribution structure connecting the two enclosures should be formed after the enclosures are fixedly installed, which makes it difficult for an ESS provider (vendor) to control installation errors.

In addition, standard enclosures of 20 feet or 40 feet are typically used in the ESS, but since the sizes of batteries and rack frames from various manufacturers vary, there has been a problem in that these structures could not be efficiently accommodated within the standard enclosures.

Now, an energy storage system according to certain embodiments of the present disclosure will be described.

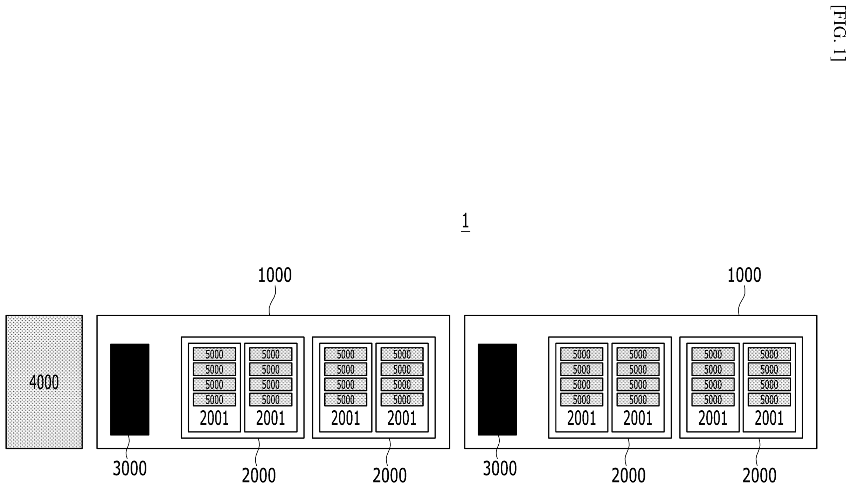

FIG. 1 is a schematic block diagram of an energy storage system according to certain embodiments of the present disclosure.

Referring to FIG. 1, the energy storage system 1 according to the present embodiments may comprise a battery enclosure 1000 including a plurality of batteries 5000, a battery rack 2000 that includes multiple batteries 5000, a control panel 3000 for managing the electrical devices inside the battery enclosure 1000, and a control cabinet 4000 for managing the status of the battery enclosure 1000 and totally controlling the operation of the energy storage system 1. The ESS 1, according to the embodiment, includes two battery enclosures 1000 each includes two battery racks 2000. Each battery rack 2000 includes two sub-racks 2001, and each sub-rack 2001 includes four batteries 5000. However, the ESS 1 is not limited to these numbers, and the number of battery enclosures 1000, battery racks 2000, sub-racks 2001, and batteries 5000, may be arbitrarily adjusted as needed.

The control cabinet 4000 may be intended to totally control the whole operation of the energy storage system 1. The energy storage system 1 may be connected to an external device through the control cabinet 4000. For example, the control cabinet 4000 may be connected to an external PCS (power conversion system). The control cabinet 4000 and the PCS are connected, so that the energy storage system 1 may receive supply of a charging power source from the PCS and may transmit a discharging power source to the PCS. Here, the PCS may also be described as being included in the energy storage system 1.

The control cabinet 4000 may be electrically connected to at least one battery enclosure 1000. The battery enclosure 1000 may receive supply of a charging power source from the control cabinet 4000 and transmit a discharging power source to the control cabinet 4000.

The control cabinet 4000 may include a control unit for controlling the operation of the energy storage system 1. The control unit may process information received from the BMS or the like of the battery enclosure 1000 and instruct the battery enclosure 1000 to operate based on the information. The control unit may transmit an electrical signal to the BMS located outside the control cabinet 4000 through a communication unit provided in the control cabinet 4000 and receive an electrical signal from the BMS. Here, the BMS may include a rack BMS electrically connected to a plurality of batteries 5000 included in the battery rack 2000 and/or a battery BMS provided in each battery 5000. As will be described later, the rack BMS may be connected to the control unit 5100 included in the battery rack 2000.

The control cabinet 4000 may be configured to be physically separated from the battery enclosure 1000. In this case, the control cabinet 4000 includes, for example, a separate housing in the form of an enclosure, and the above-mentioned control unit may be located within a housing such as an enclosure to be protected from the external environment.

The battery enclosure 1000 may include a plurality of battery racks 2000. The battery rack 2000 may include a plurality of sub-racks 2001, wherein each sub-rack 2001 may have a plurality of batteries 5000 stacked in a vertical direction. Here, the batteries 5000 located in each sub-rack 2001 may be described as forming a column. In other words, when the battery rack 2000 includes three sub-racks 2001, the battery rack 2000 may be described as including batteries 5000 arranged in three columns.

The battery enclosure 1000 may include a control panel 3000 for managing electrical devices therein. The control panel 3000 may be electrically connected to each battery rack 2000 inside the battery box 1000. The control panel 3000 may be electrically connected to each sub-rack 2001 included in the battery rack 2000. The control panel 3000 may be electrically connected to a control cabinet 4000 located outside the battery enclosure 1000. The power transmitted from the control cabinet 4000 to the battery enclosure 1000 may be transmitted to the battery rack 2000 via the control panel 3000.

The control panel 3000 may be involved in charging/discharging and other operations of the battery rack 2000. Here, the 'involvement' may include not only the case where the operation of the battery rack 2000 is controlled based on the judgment of the control panel 3000, but also the case where the control panel 3000 receives a request from the control cabinet 4000 and controls the operation of the battery rack 2000 based on the request.

In addition, the 'involvement' may be interpreted broadly, and may also include the case where the information processing process of the control panel 3000 is not involved in the operation control of the battery rack 2000. For example, in some embodiments, the control panel 3000 may be for simply integrating cables or busbars extending from a plurality of battery racks 2000 into one. In such a case, even if electrical signals transmitted and received between the control cabinet 4000 and the battery rack 2000 are transmitted through the control panel 3000, the control panel 3000 may not involve any other information processing process except for transmitting the signal during a transmission process. In this specification, the case where the electrical signal of the control cabinet 4000 is transmitted to the battery rack 2000 via the control panel 3000 without involving a separate information processing process of the control panel 3000 can also be explained as allowing the control panel 3000 to be involved in the operation of the battery rack 2000.

Below, a battery enclosure according to certain embodiments of the present disclosure will be described.

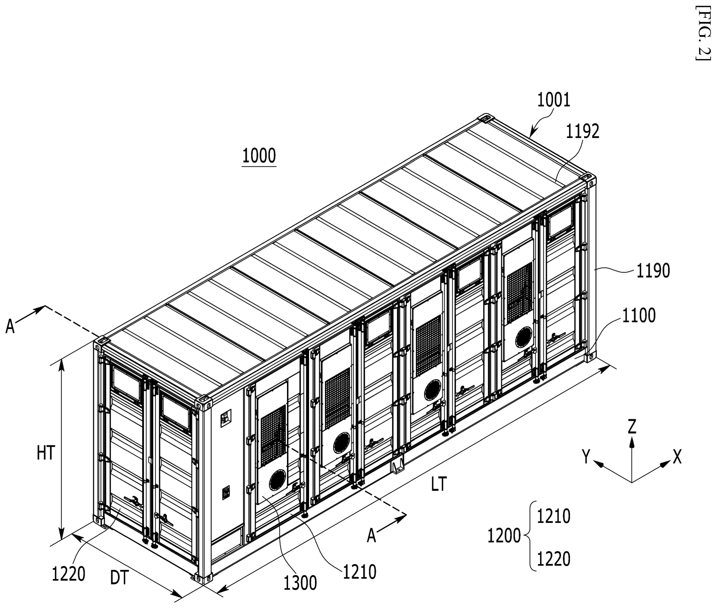

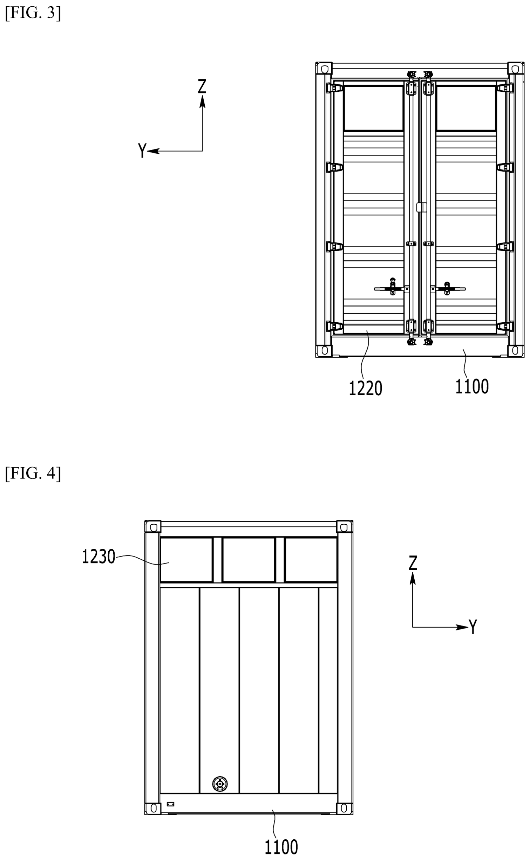

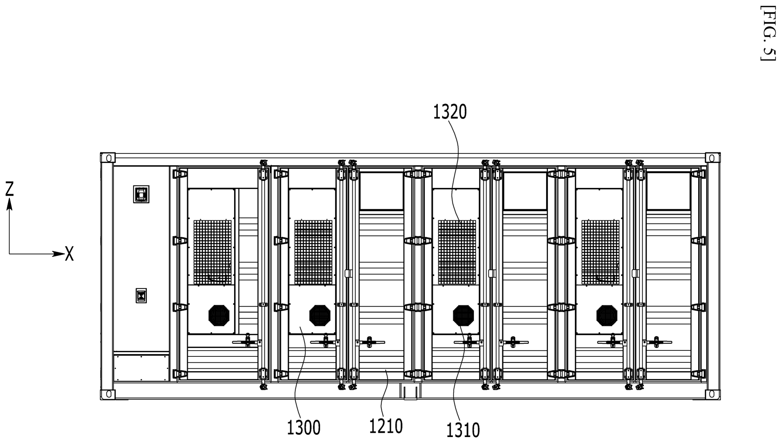

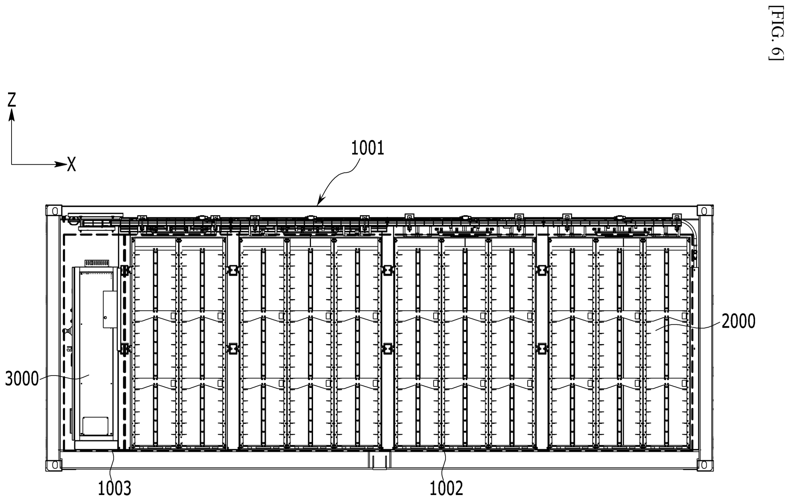

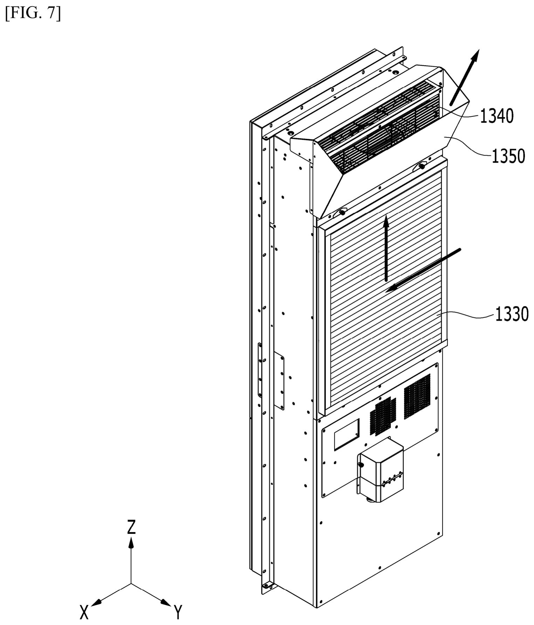

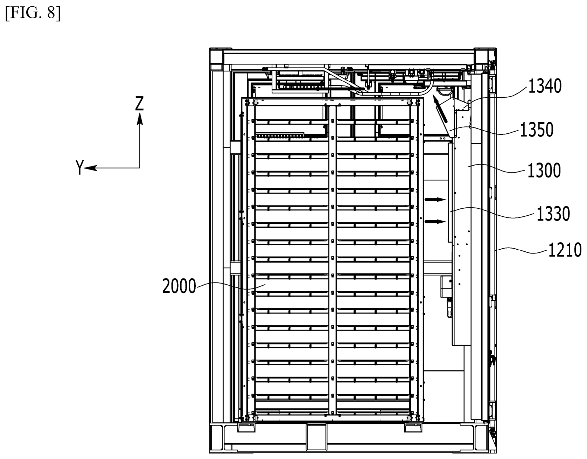

FIG. 2 is a perspective view of a battery enclosure 1000 according to certain embodiments of the present disclosure. FIG. 3 is a side view of a battery enclosure 1000 according to certain embodiments of the present disclosure. FIG. 4 is another side view of a battery enclosure according to certain embodiments of the present disclosure 1000. FIG. 5 is a front view of a battery enclosure 1000 according to certain embodiments of the present disclosure. FIG. 6 is a front view showing a state in which some components are omitted from the battery enclosure 1000 according to FIG. 2. FIG. 7 is a perspective view of an air conditioner included in the battery enclosure 1000 according to FIG. 2. FIG. 8 is a cross-sectional view taken along line A-A of FIG. 2.

Referring to FIGS. 2 to 8, the battery enclosure 1000 of the present embodiments may include an enclosure 1001 having an accommodation space therein, and a battery rack 2000 that is located in the accommodation space formed by the enclosure 1001 and mounts a battery 5000.

the battery 5000 refer to energy storage units provided in the battery rack 2000, which may be a battery module or a battery pack. According to an embodiment, the battery 5000 may be located in the battery rack 2000 that is located in the accommodation space inside the enclosure 1001.

The enclosure 1001 may have a rectangular parallelepiped shape including a lower surface, an upper surface, and a side surface extending between the lower surface and the upper surface. The side surface of the enclosure 1001 may be divided into a front surface, a rear surface, a left surface, and a right surface. The enclosure 1001 may be described as having a length, a depth and a height.

Here, the length value LT of the enclosure 1001 may be a size on the X-axis. The depth value DT of the enclosure 1001 may be a size on the Y-axis. The height value HT of the enclosure 1001 may be a size on the Z-axis. Here, the length value, the depth value, and the height value of the battery rack 2000 may also be described as sizes on the X-axis, Y-axis, and Z-axis, similar to the enclosure 1001.

Furthermore, the two sides of the enclosure 1001 in the longitudinal direction (X-axis direction) may be referred to as the left side (-X-axis direction) and the right side (+X-axis direction). The two sides of the enclosure 1001 in the depth direction may be referred to as the front side (-Y-axis direction) and the rear side (+Y-axis direction). The two sides of the enclosure 1001 in the height direction may be referred to as the upper side (+Z-axis direction) and the lower side (-Z-axis direction). Here, the left and right, front and rear, and up and down of the battery rack 2000 may also be described in this manner.

The enclosure 1001 may include a base 1100 forming the lower part, a main column 1190 located to erect vertically to the base 1100 at a corner of the base 1100, and a roof 1192 vertically connected to the main column 1190 to form the upper part of the enclosure 1001.

A plate-shaped member may be located between the main columns 1190 of the enclosure 1001, and the edges of the plate-shaped member facing to each other may be fixed to the main columns 1190, thereby forming a side surface of the enclosure 1001. However, as will be described later, some of the side surfaces of the enclosure 1001 may be provided with doors 1200 or other members.

The enclosure 1001 may include a door 1200 for opening and closing the enclosure 1001. At least one side of the enclosure 1001 is opened through the door 1200, so that an operator can approach a configuration inside the enclosure 1001, which makes it possible to perform maintenance and repair of the battery enclosure 1000. Furthermore, the door 1200 is closed, so that the inside of the enclosure 1001 can be blocked from the outside, which makes it possible to protect the internal battery 5000 and the like from outside environments.

The door 1200 may be formed in a plural number. The door 1200 may include a first door 1210 and a second door 1220. The first door 1210 may be located on one surface of the enclosure 1001, and the second door 1220 may be located on the other surface of the enclosure 1001.

A battery rack 2000 may be positioned at the rear side of the first door 1210 to allow an access to the battery rack 2000 by an operator. The enclosure 1001 is provided with the first door 1210, and therefore, if malfunctions or fires occur in the battery 5000, the problematic phenomenon in the battery enclosure 1000 can be resolved by quickly separating or replacing the battery 5000 or the battery rack 2000.

Here, the first door 1210 may be formed in a plural number. Each first door 1210 may be for individually managing a battery rack 2000. Each first door 1210 may correspond to each battery rack 2000 located in the accommodation space. However, the first door 1210 may be arranged in numbers smaller or higher than the number of battery racks 200 in accordance with the design.

The control panel 3000 may be positioned on the rear side of the second door 1220 to allow an access to the control panel 3000 by an operator.

One surface of the enclosure 1001 where the first door 1210 is positioned and another surface of the enclosure 1001 where the second door 1220 is positioned, may be disposed to be perpendicular to each other, thereby allowing the first door 1210 and the second door 1220 to be positioned perpendicular to each other. For example, the first door 1210 may be positioned on the front surface of the enclosure 1001, and the second door 1220 may be positioned on one of the left or right surfaces of the enclosure 1001.

Meanwhile, conventionally, doors are provided on each of the front and rear surfaces of the enclosure 1001 so as to facilitate installation and management of the battery 5000. However, the enclosure 1001 is mainly designed to have a large length value LT, therefore, when a door is provided on the rear surface, the door is located in a relatively large area, which causes a problem that it is more difficult to seal and manage the enclosure 1001. In addition, if a door is provided on the rear surface, it is difficult for an operator to approach, and if two enclosures 1001 are arranged facing the rear surface, a separation space of the level to allow the operator to approach is required, which may make efficient space utilization difficult. However, in the enclosure 1001 according to the present embodiments, the above-mentioned problem is minimized by providing a second door 1220 on the left surface or right surface, instead of the door located on the rear surface.

Referring to FIG. 6, the accommodation space inside the enclosure 1001 in the present embodiments may include a power storage space 1002 and a control space 1003.

The power storage space 1002 and the control space 1003 may be located side by side in the longitudinal direction (X-axis direction) of the enclosure 1001. The power storage space 1002 may be located on one side of the enclosure 1001 in the longitudinal direction (X-axis direction), and the control space 1003 may be located on the other side of the enclosure 1001 in the longitudinal direction (X-axis direction). For example, the power storage space 1002 may be located on the right side or left side of the enclosure 1001, and the control space 1003 may be located on the left side or right side of the enclosure 1001.

Here, the power storage space 1002 and the control space 1003 are divided and described, but this description does not mean that the power storage space 1002 and the control space 1003 are isolated from each other. Therefore, a partition wall or the like may not be added between the power storage space 1002 and the control space 1003 to separate them.

The power storage space 1002 may be a space that is opened and closed by the first door 1210. A battery rack 2000 including a battery 5000 may be located in the power storage space 1002.

The control space 1003 may be a space that is opened and closed by the second door 1220, which may open toward the left or right side of the enclosure 1001 as described above. In the control space 1003, the control panel 3000 may be positioned to face one of the left and right surfaces of the enclosure 1001 to allow an operator to access the control panel 3000 in the control space 1003 through the second door 1220. The control panel 3000 has a structure whose depth value is relatively small, wherein the control panel 3000 is arranged toward the left surface or right surface rather than the front surface, so that the dead space of the enclosure 1001 can be minimized. Furthermore, this allows the length value LT of the enclosure 1001 to be minimized.

On the other hand, a conventional control panel 3000 was located in the center of the enclosure 1001. If the control panel 3000 is located in the center, the distance between the control panel 3000 and each battery rack 2000 may be shortened, however, the control panel 3000 is fixed to face the front surface, which causes a problem that the space is not used efficiently. However, according to the present embodiments, since the control panel 3000 is located in the control space 1003 provided on one side of the enclosure 1001, the control panel 3000 can be freely arranged, such as without having to face the front surface. Thereby, the control panel 3000 can be changed in its position so as to face the left surface or the right surface of the enclosure 1001, thereby minimizing the dead space in the internal space of the enclosure 1001. Here, the arrangement direction of the control panel 3000 may be described based on the direction in which the door of the control panel 3000 faces.

Referring to FIG. 4, the enclosure 1001 of the present embodiments may include an explosion-proof door 1230. The explosion-proof door 1230 may discharge gas generated by an internal thermal runaway phenomenon to the outside. The explosion-proof door 1230 is kept closed in a normal time, but is opened when a thermal runaway phenomenon of the battery 5000 occurs, thereby allowing communication between the inside and the outside of the enclosure 1001. The explosion-proof door 1230 may be formed in a singular or plural number. The explosion-proof door 1230 may be located on one surface of the enclosure 1001 facing the second door 1220. However, it is also possible to form the explosion-proof door 1230 at a position different from that described above.

Referring to FIGS. 7 and 8, the enclosure 1001 may include an air conditioner 1300 for heat dissipation of the battery 5000. The air conditioner 1300 may be provided in a state coupled to the door 1200. Thereby, the space occupied by the air conditioner 1300 inside the enclosure 1001 may be minimized.

In the present embodiments, the first door 1210 may be located to correspond to each battery rack 2000. The air conditioner 1300 may be provided in a state of being coupled to the first door 1210 to thereby correspond to each battery rack 2000. However, the first door 1210 can be arranged in numbers higher or smaller than the number of battery racks 2000 in accordance with the design, and therefore, the range to which each air conditioner 1300 corresponds may be set differently from that described above.

The air conditioner 1300 of the present embodiments may be configured to combine an indoor unit for cooling the interior and an outdoor unit for discharging heat to the outside. As shown in FIG. 5, the air conditioner 1300 includes an outdoor inlet part 1310 and an outdoor outlet port 1320 located on the outside of the enclosure 1001, through which the inflow of outside air and the discharge of internal air can be achieved. In addition, referring to FIGS. 7 and 8, the air conditioner 1300 may include an indoor inlet port 1330 and an indoor outlet port 1340 located on the inner side of the enclosure 1001. The air discharged through the indoor outlet port 1340 can move to the rear surface of the battery rack 2000, and the moved air moves again from the rear surface to the front surface of the battery rack 2000, so that the battery mounted on the battery rack 2000 can be cooled.

Meanwhile, a guide 1350 for guiding the flow of air can be located on the periphery of the indoor outlet port 1340. The air discharged from the indoor outlet port 1340 through the guide 1350 can be concentrated to the upper part of the enclosure 1001, and then moved to the rear surface of the battery rack 2000. If the air discharged from the air conditioner 1300 is scattered over a wide space, it is difficult to form the flow of air for cooling the battery 5000, so that the guide 1350 can form the flow of air inside the enclosure 1001.

Next, the structure of the base 1100 of the battery enclosure 1000 according to the present embodiments will be described.

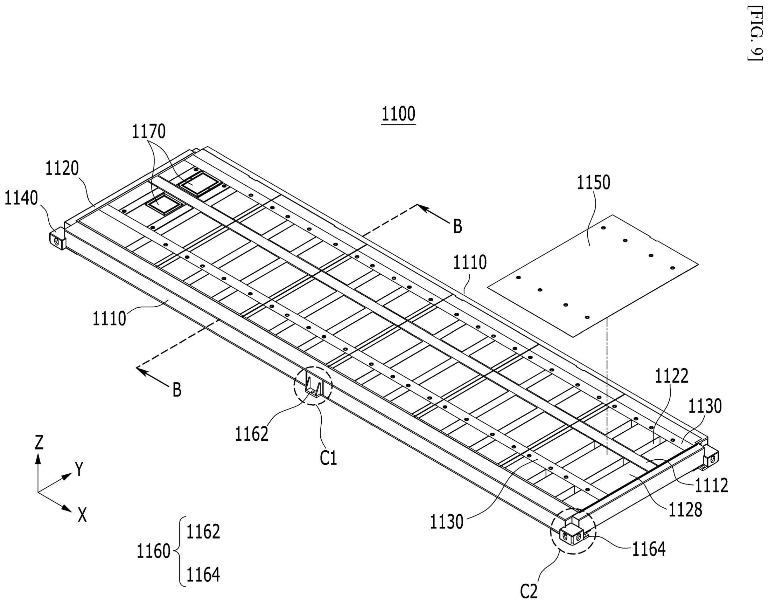

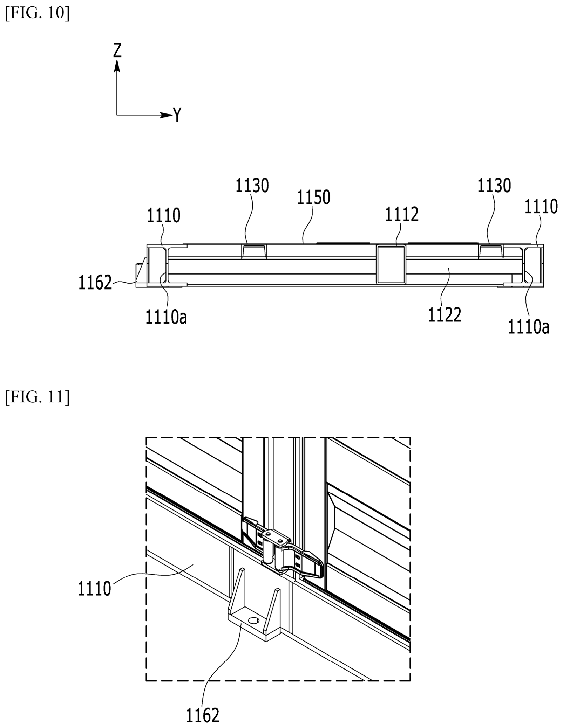

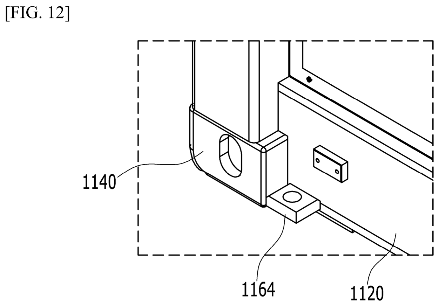

FIG. 9 is a perspective view of the base of the enclosure included in the battery enclosure according to FIG. 2. FIG. 10 is a cross-sectional view taken along line B-B of FIG. 9. FIG. 11 is an enlarged view of a section C1 of FIG. 9. FIG. 12 is an enlarged view of a section C2 of FIG. 9.

Referring to FIGS. 9 to 12, the enclosure 1001 of the present embodiments may include a base 1100. The base 1100 may include two horizontal beams 1110 facing each other and two vertical beams 1120 facing each other.

The two horizontal beams 1110 and the two vertical beams 1120 may form the outer shape of the base 1100. The horizontal beam 1110 and the vertical beam 1120 are arranged vertically, and one end of the horizontal beam 1110 and one end of the vertical beam 1120 may be coupled to each other to form a rectangular shape. Here, a coupler 1140 may be provided to couple one end of the horizontal beam 1110 and one end of the vertical beam 1120. However, it is also possible to couple one end of the horizontal beam 1110 and one end of the vertical beam 1120 in a different form without using the coupler 1140.

The horizontal beam 1110 may be a structure that extends along the longitudinal direction (X-axis direction) of the enclosure 1001. The vertical beam 1120 may be a structure that extends along the depth direction (Y-axis direction) of the enclosure 1001. The length value of the horizontal beam 1110 may be greater than the length value of the vertical beam 1120.

Referring to FIG. 10, the horizontal beam 1110 may include a partition wall 1110a therein, which can further supplement the rigidity of the horizontal beam 1110. Due to the partition wall 1110a, the axial cross section shape of the horizontal beam 1110 may include an I-shape. The cross section of the horizontal beam 1110 may have an I-shape in which at least one of the both sides opened is closed. Here, the axial cross section may mean a cross section cut perpendicular to the axis in the longitudinal direction of the horizontal beam 1110.

Meanwhile, the partition wall may can be arranged inside not only the horizontal beam 1110 but also the vertical beam 1120 in accordance with the design.

A plate-shaped member 1150 may be located on the upper side of the two horizontal beams 1110 and the two vertical beams 1120. The plate-shaped member 1150 may form the upper surface of the base 1100. The plate-shaped member 1150 may be formed in a singular, or may be formed in a plural number as in FIG. 9. A battery rack 2000 may be arranged on the plate-shaped member 1150. A plurality of holes may be formed in the plate-shaped member 1150, and in a state wherein the battery rack 2000 is located on the plate-shaped member 1150, a fixing member such as a bolt may be inserted into the hole of the plate-shaped member 1150, so that the battery rack 2000 can be fixed to the base 1100.

A sub-horizontal beam 1112 may be located between two horizontal beams 1110. The sub-horizontal beam 1112 may be located parallel to the horizontal beam 1110. A sub-vertical beam 1122 may be located between two vertical beams 1120. The sub-vertical beam 1122 may be located parallel to the vertical beam 1120. The sub-horizontal beam 1112 supports the plate-shaped member 1150 together with the horizontal beam 1110, so that the battery rack 2000 can be stably supported by the base 1100. Furthermore, the sub-vertical beam 1122 extends between the two horizontal beams 1110 or between the horizontal beam 1110 and the sub-horizontal beam 1112, so that the rigidity of the base 1100 structure can be supplemented.

Here, the sub-horizontal beam 1112 may be a structure that extends vertically from the vertical beam 1120 between two vertical beams 1120. The sub-vertical beam 1122 may be a structure that extends vertically from the horizontal beam 1110 between one of the two horizontal beams 1110 and the sub-horizontal beam 1112.

The end of the sub-vertical beam 1122 can abut against the partition wall 1110a of the horizontal beam 1110. By fixing the sub-vertical beam 1122 and the partition wall 1110a, the structural stability of the base 1100 can be improved.

The horizontal beam 1110, the vertical beam 1120, the sub-horizontal beam 1112, and the sub-vertical beam 1122 may be arranged parallel or perpendicular to each other, so that a lattice space may be formed between the beams 1110, 1120, 1112 and 1122. A heat insulating material 1128 may be provided in the above-mentioned lattice space.

The cross section of the sub-vertical beam 1122 may be smaller than the cross section of the vertical beam 1120, and the sub-vertical beam 1122 may be located relatively further inside the base 1100 compared to the other beams 1110, 1120 and 1112. Thereby, a separation space may be formed between the sub-vertical beam 1122 and the plate-shaped member 1150, and a rack fixed beam 1130 may be located in this separation space.

The rack-fixed beam 1130 may be for stably fixing the base 1100 and the battery rack 2000. The rack fixed beam 1130 may be arranged at a coupling position of the battery rack 2000 and the base 1100. The rack fixed beam 1130 may extend parallel to the horizontal beam 1110 between the two horizontal beams 1110. The rack fixed beam 1130 may be a structure that extends perpendicular to the vertical beam 1120 between the two vertical beams 1120. The cross section of the rack fixed beam 1130 may be smaller than the cross section of the horizontal beam 1110. The rack fixed beam 1130 may be located on an upper side of the sub-vertical beam 1122, so that the rack fixed beam 1130 can be supported by the sub-vertical beam 1122.

The rack fixed beam 1130 may be formed with holes, and the holes of the rack fixed beam 1130 may correspond to the holes of the plate-shaped member 1150. In a state wherein the holes of the rack fixed beam 1130 and the holes of the plate-shaped member 1150 are located on the same axis, a fixing member passing through the lower part of the battery rack 2000 is inserted into the above-mentioned holes, so that the battery rack 2000 and the base 1100 can be stably fixed.

Meanwhile, the base 1100 may include a fixing part 1160 for stably fixing the installation surface and the enclosure 1001. The fixing part 1160 includes a hole, and a fixing member such as a bolt or a washer is inserted into the hole, so that the enclosure 1001 can be fixed to the installation surface.

Referring to FIGS. 11 and 12, the fixing part 1160 may include a middle fixing part 1162 and a corner fixing part 1164.

As shown in FIG. 11, the middle fixing part 1162 may be formed on the horizontal beam 1110. The middle fixing part 1162 may include a lower surface having a hole formed therein and a support surface extending between the lower surface and the horizontal beam 1110. The support surface may have a triangular shape, and may have a shape that extends vertically to the lower surface from an edge of the lower surface and is connected to the horizontal beam 1110.

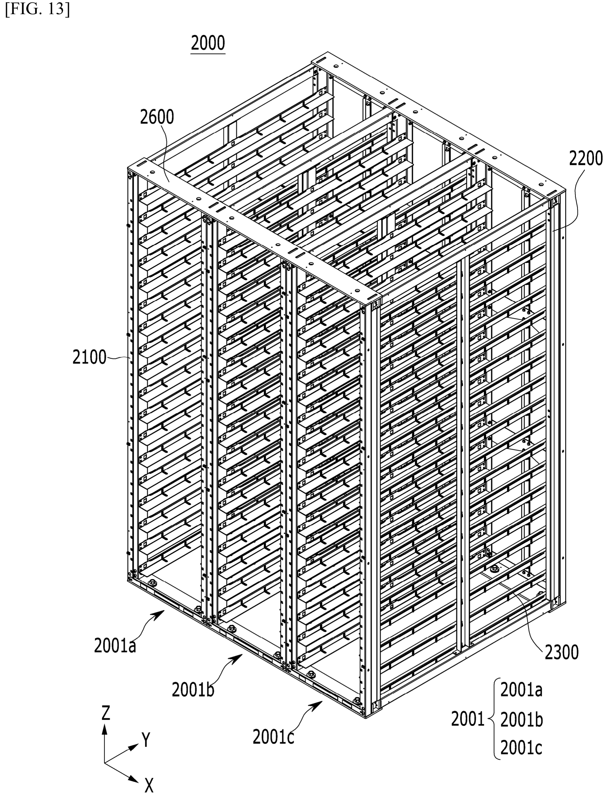

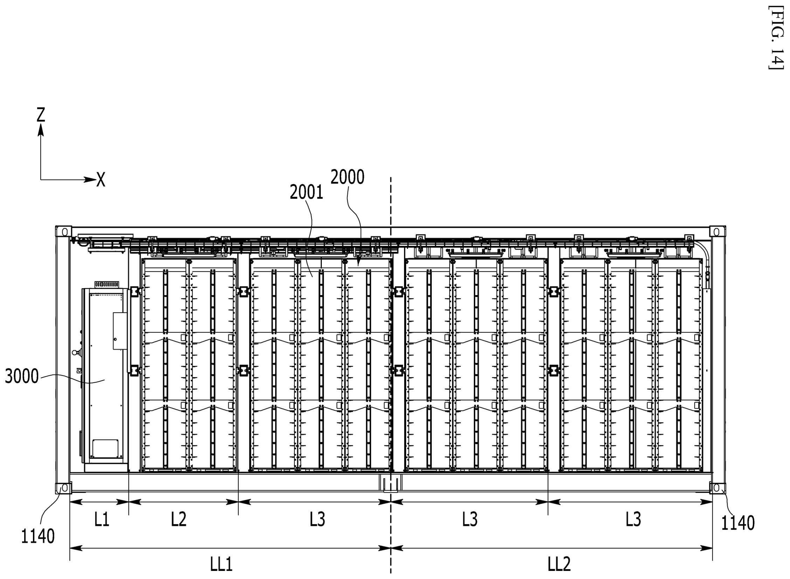

The middle fixing part 1162 may be located between two corner fixing part 1164 and may not necessarily be positioned in the center of the horizontal beam 1110 in the length direction. For example, the middle fixing part 1162 may be located closer to the other than to one of the two corner fixing part 1164. In the example of FIG. 9, the middle fixing part 1162 may be located closer to the corner fixing part 1164 located on the -Y axis than to the corner fixing part 1164 located on the +Y axis. This will be described in more detail in FIGS. 13 and 14.

As shown in FIG. 12, the corner fixing part 1164 may be located adjacent to the coupler 1140. The corner fixing part 1164 may include a surface having a hole formed therein. One edge of one surface included in the corner fixing part 1164 may be adjacent to the coupler 1140. Another edge perpendicular to the above-mentioned one edge of one surface included in the corner fixing part 1164 may be adjacent to the vertical beam 1120. The corner fixing part 1164 may be coupled to the vertical beam 1120 or the coupler 1140. In other words, the corner fixing part 1164 may be formed at the end of the vertical beam 1120. Alternatively, the corner fixing part 1164 may be formed on the coupler 1140.

Here, in FIG. 12, the corner fixing part 1164 is shown as being located between the vertical beam 1120 and the coupler 1140, however, unlike the same, the corner fixing part 1164 can be located close to the horizontal beam 1110 and the coupler 1140. In this case, two orthogonal edges among the edges of one surface of the corner fixing part 1164 may be adjacent to the coupler 1140 and the horizontal beam 1110, respectively. Furthermore, in this case, the corner fixing part 1164 can be described as being formed at the end of the horizontal beam 1110.

Meanwhile, the more the number of fixing parts 1160, the more stably the enclosure 1001 and the installation surface can be fixed. However, if the number of fixing parts 1160 is large, the installation process becomes more complicated, which causes a problem that the installation time becomes long and the fatigue of the operator increases. Therefore, the fixing part 1160 formed in the enclosure 1001 of the present embodiments is provided in a minimum number by optimizing its position.

FIG. 13 is a perspective view of a battery rack included in a battery enclosure 1000 according to FIG. 2. FIG. 14 is a diagram for explaining the position of a fixing part 1160 in a battery enclosure 1000 according to FIG. 2.

Referring to FIGS. 13 and 14, a plurality of battery racks 2000 may be located inside the enclosure 1001 of the present embodiments. Here, each battery rack 2000 may be provided in a structure including a plurality of sub-racks 2001, such as a first sub-rack 2001a, a second sub-rack 2001b and a third sub-rack 2001c.

Referring to FIG. 13, each sub-rack 2001 may include columns 2100 and 2200 extending in a vertical direction, and a bracket 2300 coupled to these columns 2100 and 2200 to form an accommodation space on which a battery 5000 is seated.

The columns 2100 and 2200 may include a front column 2100 and a rear column 2200. Two front columns 2100 and two rear columns 2200 form a square column shape, so that the overall outer shape of the sub-rack 2001 or the battery rack 2000 can be formed.

Adjacent sub-racks 2001 can be coupled to each other. Two columns 2100 and 2200 that are included in each of the two sub-racks 2001 and are located adjacent to each other are coupled, so that two adjacent sub-racks 2001 can be coupled. The two columns 2100 and 2200 located adjacent to each other can be coupled by a connecting block (not shown) located between the two sub-racks 2001. The two columns 2100 and 2200 located adjacent to each other can be coupled by a support frame 2600 that crosses the upper end or lower end of the two sub-racks 2001.

In FIG. 13, the battery rack 2000 is shown as including three sub-racks 2001, however, unlike the same, the battery rack 2000 can include two sub-racks 2001. Additionally, the battery rack 2000 may include more sub-racks 2001 in accordance with a change in the design.

The position of the fixing part 1160 according to the present embodiments in FIG. 9 may be determined in accordance with the structure of the battery rack 2000. More specifically, the fixing part 1160 of the present embodiments may be formed at a position corresponding to the columns 2100 and 2200 of the battery rack 2000. The middle fixing part 1162 may be located to correspond to the columns 2100 and 2200 of the battery rack 2000. Here, being located to correspond may mean that the fixing part 1160 or the middle fixing part 1162 is formed on an extension line of the direction (Z-axis direction) in which the columns 2100 and 2200 of the battery rack 2000 extend.

Typically, the middle fixing part 1162 to be located at the center in the longitudinal direction (X-axis direction) in order to stably support the enclosure 1001. However, as described earlier, the middle fixture 1162 may not necessarily be positioned in the center in the length direction (e.g., the X-axis direction). Additionally, when there the middle fixing part 1162 are formed in a plural number, the middle fixtures 1162 may be arranged at equal intervals.

However, in the battery enclosure 1000 of the present embodiments, most of the weight may be derived from the battery rack 2000, and the weight in the battery rack 2000 may be concentrated on the columns 2100 and 2200. Therefore, in order to enhance the stability of the battery enclosure 1000, it may be preferable that the middle fixing part 1162 is located to correspond to the columns 2100 and 2200 of the battery rack 2000, rather than being located in the center.

As illustrated in FIG. 14, the battery rack 2000 including three sub-racks 2001 may be located at three places inside the enclosure 1001 of the present embodiments, and the battery rack 2000 including two sub-racks 2001 may be located at the far left. In addition, the control panel 3000 may be located adjacent to the battery rack 2000 including two sub-racks 2001.

When the middle fixing part 1162 does not correspond to the columns 2100 and 2200 of the battery rack 2000, the weight of the battery rack 2000 may be concentrated in a relatively unstable position, so that the battery rack 2000 may not be stably fixed, or a large stress may be formed in a fragile portion, which may cause a problem that the enclosure 1001 is damaged. Therefore, according to the present embodiments, the middle fixing part 1162 is located to correspond to the columns 2100 and 2200 of the battery rack 2000, through which stress formed in the base 1100 of the enclosure 1001 by the battery rack 2000 may be made to be concentrated on the periphery of the middle fixing part 1162.

Thereby, the position of the middle fixing part 1162 in the longitudinal direction (X-axis direction) of the enclosure 1001 may be a position that is close to the center of the enclosure 1001, but spaced apart from the center by a certain distance.

Meanwhile, the length value LT of the enclosure 1001 may be formed differently according to the length of the battery rack 2000 and the size of the control panel 3000. In the present embodiments, since the control panel 3000 is arranged toward the left surface or the right surface of the enclosure 1001, the depth value of the control panel 3000 may affect the length value LT of the enclosure 1001. Here, the size of the enclosure 1001 in the longitudinal direction (X-axis direction) occupied by the control panel 3000 may be referred to as the first length L1. The size of the enclosure 1001 in the longitudinal direction (X-axis direction) occupied by the control panel 3000 may correspond to the depth value of the control panel 3000. Additionally, the length value of the battery rack 2000 including two sub-racks 2001 may be referred to as the second length L2. The length value of the battery rack 2000 including three sub-racks 2001 may be referred to as the third length L3.

Here, the first length L1, the second length L2, and the third length L3 may include at least a part of the margin space provided on both sides of the control panel 3000 or the battery rack 2000. Therefore, the first length L1 may refer to the size of the space occupied by the control panel 3000, and it may be greater than the depth value of the control panel 3000. The second length L2 and the third length L3 may be greater than the length value of the battery rack 2000. The first length L1 may mean the size of the space occupied by the control panel 3000.

Referring again to FIG. 14, the middle fixing part 1162 may be located apart by a first fixed length LL1 and a second fixed length LL2 from both ends of the enclosure 1001 in the longitudinal direction (X-axis direction). In this case, the both ends of the enclosure 1001 in the longitudinal direction (X-axis direction) may be referred to in a state where the main column 1190 is omitted. Here, the first fixed length LL1 may be the sum of the first length L1, the second length L2 and the third length L3. The second fixed length LL2 may be twice the third length L3. Additionally, the internal space of the enclosure 1001 corresponding to the first fixed length LL1 may be referred to as a first space. The internal space of the enclosure 1001 corresponding to the second fixed length LL2 may be referred to as a second space.

The first fixed length LL1 may be greater than the second fixed length LL2. As shown in FIG. 14, five sub-racks 2001 may be located in the first space corresponding to the first fixed length LL1. Six sub-racks 2001 may be located in the second space corresponding to the second fixed length LL2. At least five sub-racks 2001 may be located between the middle fixed part 1162 and the corner fixed part 1164. At least five columns may be located between the middle fixed part 1162 and the corner fixed part 1164.

In the second space corresponding to the second fixed length LL2, more batteries 5000 can be located than in the first space corresponding to the first fixed length LL1, so that the weight of the first space can be smaller than that of the second space. In this way, the size of the second space having a larger weight may be formed smaller than that of the first space having a smaller weight. When analogically applying the principle of a lever, the position of the middle fixing part 1162 is formed to be partially biased, so that the middle fixing part 1162 can support the enclosure 1001 more stably than when formed at an equal position.

Here, the principle of the lever means that the product of the distance between the fulcrum and the point of application and the weight of the object located at the point of application is equal to the product of the distance between the fulcrum and the point of application and the force applied to the lever.

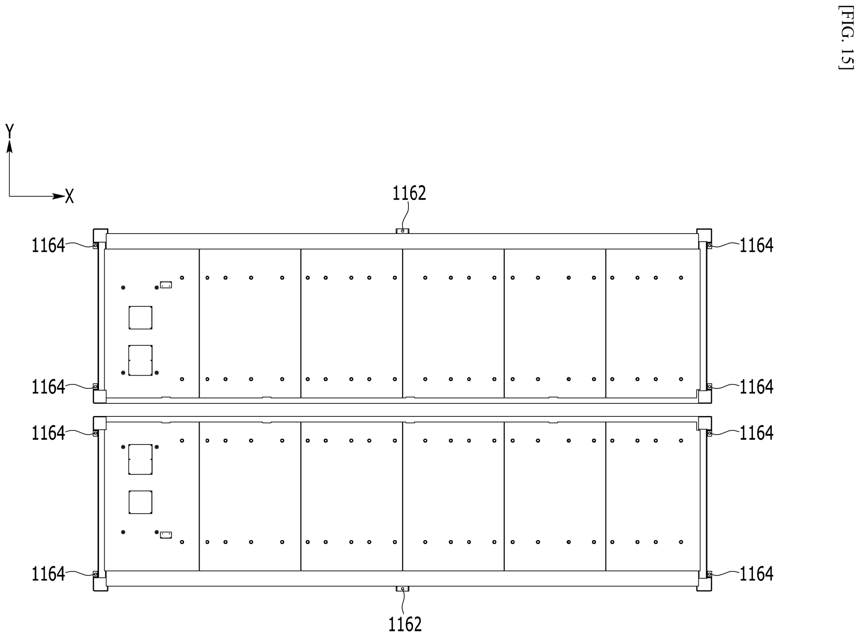

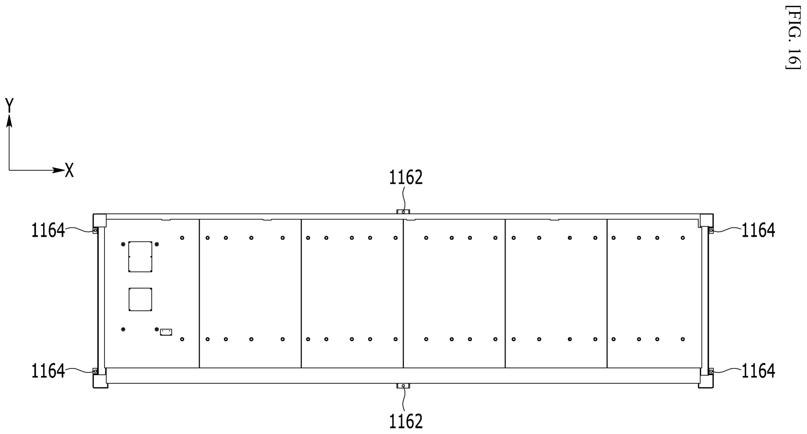

FIG. 15 is a diagram for explaining the arrangement of the battery enclosure when the battery enclosure according to FIG. 2 is formed in a plural number. FIG. 16 is a diagram showing modified embodiments of a base included in a battery enclosure according to FIG. 2.

Referring to FIGS. 15 and 16, in the present embodiments, the corner fixing parts 1164 may be individually provided at each corner of the enclosure 1001. That is, the number of the corner fixing part 1164 may be four.

On the other hand, the middle fixing part 1162 may be provided in one part on one horizontal beam 1110 included in the enclosure 1001. Here, the middle fixing member 1162 may be formed in two or more, but as mentioned above, in the present embodiments, the middle fixing parts 1162 are located to correspond to the columns 2100 and 2200 of the battery rack 2000, so that two or more middle fixing parts 1162 may be not necessary.

On the other hand, when a plurality of enclosures 1001 are provided in the installation spaces as in FIG. 15, the two enclosures 1001 may be arranged so that their rear surfaces face each other. In the present embodiments, since the door is not provided on the rear surface of the enclosure 1001, a separation distance value between the two enclosures 1001 facing the rear surface may be made relatively small. Thereby, when vibrations or the like occur, the two enclosures 1001 may support each other through the rear surface, so that the middle fixing part 1162 formed on the horizontal beam 1110 on the rear side may be not necessary. Therefore, in this case, the minimum number of the fixing parts 1160 formed on the enclosure 1001 may be five. That is, the fixing part 1160 of the enclosure 1001 may include one middle fixing part 1162 and four corner fixing parts 1164.

On the other hand, in the case where the enclosure 1001 is provided alone in the installation space as in FIG. 16, or two adjacent enclosures 1001 are arranged to face the left surface or the rear surface, it may be preferable that the middle fixing part 1162 is formed on each of the two horizontal beams 1110 so that the rear side of the enclosure 1001 is stably fixed. Therefore, in this case, the minimum number of the fixing parts 1160 formed in the enclosure 1001 may be six. That is, the fixing parts 1160 may include two middle fixing parts 1162 and four corner fixing parts 1164.

The electrical connection relationship of the battery enclosure included in the energy storage system according to the present embodiments will be described below.

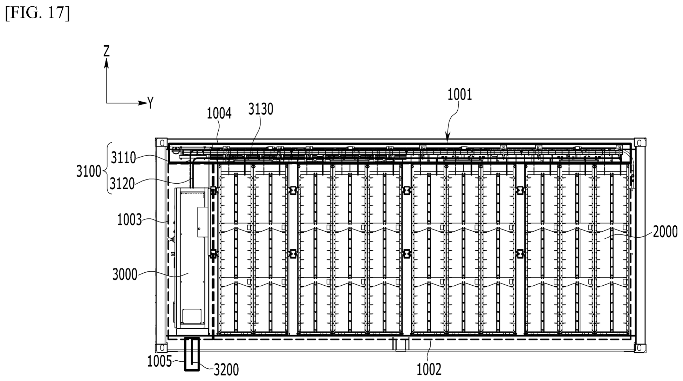

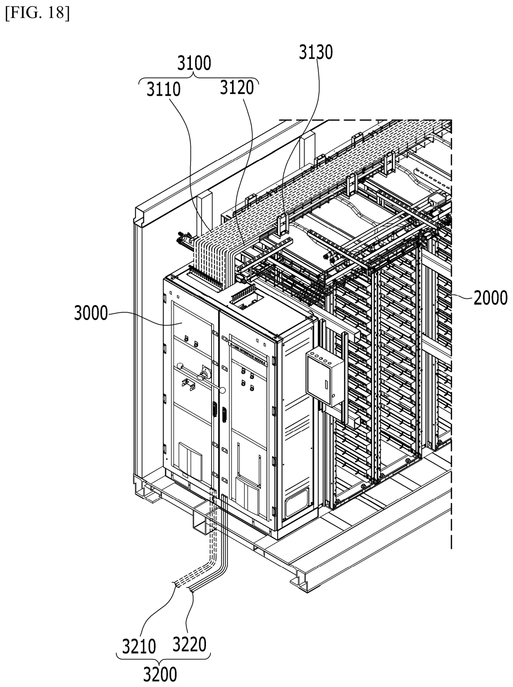

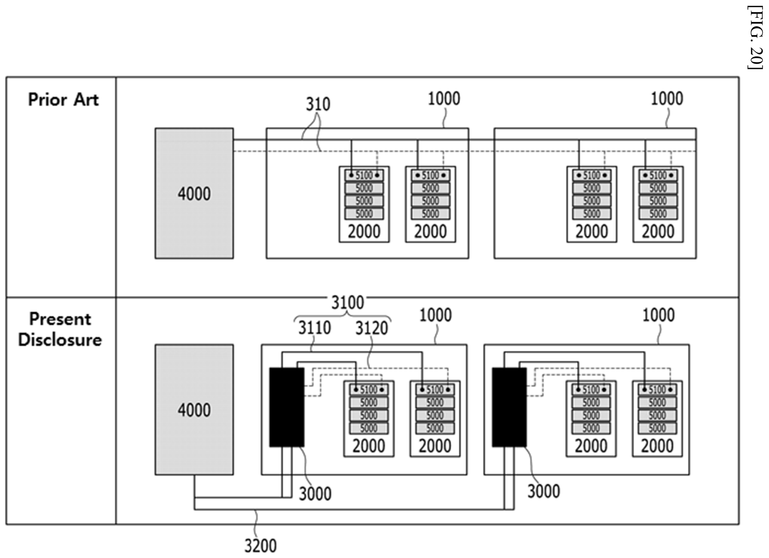

FIGS. 17 to 19 are diagrams for explaining an electrical connection structure inside a battery enclosure according to certain embodiments of the present disclosure. FIG. 20 is a diagram for explaining an electrical connection structure of an energy storage system 1 according to certain embodiments of the present disclosure.

Meanwhile, in FIG. 20, for ease of explanation. illustration of the sub-rack 2001 is omitted from the battery rack 2000, but the structure of the battery rack 2000 of the present embodiments is not limited thereby. Therefore, the battery rack 2000 may include two or more sub-racks 2001, and the first cable 3100 extending from the control panel 3000 may be connected to each sub-rack 2001. More specifically, the first cable 3100 may be connected to the control unit 5100 located at the upper end of the sub-rack 2001.

Referring to FIGS. 17 to 20, the battery enclosure 1000 of the present embodiments may include cables 3100 and 3200 that receive supply of power from an external electrical device, i.e., a PCS or a control cabinet 4000, and supplies electric power.

The cables 3100 and 3200, which include first cables 3100 and second cables 3200, may transmit a charging power source and a discharging power source. The cables 3100 and 3200 can transmit a charging power source supplied to the battery enclosure 1000 and/or a discharging power source discharged from the battery enclosure 1000. The cables 3100 and 3200 can transmit a charging power source supplied to the battery rack 2000 and/or a discharging power source discharged from the battery rack 2000. The cables 3100 and 3200 can be connected to a control panel 3000 located inside the battery enclosure 1000. The cables 3100 and 3200 can electrically connect the control panel 3000 of the battery enclosure 1000 and the control cabinet 4000. The cables 3100 and 3200 can electrically connect the control panel 3000 and the battery rack 2000 within the battery enclosure 1000.

The first cable 3100 extends within the battery enclosure 1000, and can form a connection between electrical devices located inside the enclosure 1001. The first cable 3100 can form an electrical connection between the control panel 3000 and the battery rack 2000.

Referring to FIG. 20, the battery rack 2000 may include a control unit 5100. The control unit 5100 may be located in each column of the battery rack 2000, i.e., at the uppermost end or lowermost end of each sub-rack 2001. The batteries 5000 stacked in each column may be connected in series, and the battery 5000 located at the uppermost end or lowermost end of the batteries 5000 in each column may be electrically connected to the control unit 5100. The control unit 5100 of the battery rack 2000 may be electrically connected to the control panel 3000 via the first cable 3100. In this manner, a power source may be supplied to the battery 5000 via the control unit 5100.

The control unit 5100 may be connected to a BMS that collects status information of the battery rack 2000 and transmits the collected information to a control panel 3000 or a control cabinet 4000. The BMS connected to the control unit 5100 may be referred to as a rack BMS. Here, the rack BMS may be described as being included in the control unit 5100.

The battery 5000 may also include a BMS that collects status information of the battery 5000 and transmits the collected information to a control unit 5100 or a rack BMS, etc. The BMS included in the battery 5000 may be referred to as a battery BMS. The rack BMS and/or the battery BMS may transmit the collected information to an external device or receive transmission of information from an external device. The control unit 5100 of the battery 5000 or the battery rack 2000 may be provided with a communication unit for transmitting and/or receiving information from the rack BMS and/or the battery BMS

The first cable 3100 may include a plurality of cathode cables 3110 and a plurality of anode cables 3120. One end of each of the cathode cable 3110 and anode cable 3120 may be connected to a control panel 3000, and the other end may be connected to a control unit 5100 located in each column of the battery rack 2000, through which each control unit 5100 may be connected in parallel with the control panel 3000. In this manner, each battery rack 2000 is connected in parallel with the control panel 3000, and therefore, when a malfunction or ignition phenomenon of a specific battery 5000 is detected by the BMS, the relevant battery rack 2000 is electrically cut off through the control unit 5100, thereby preventing further problematic phenomena.

The first cable 3100 may extend from one side to the other side along the longitudinal direction (X-axis direction) of the enclosure 1001. In the present embodiments, the first cable 3100 may extend from the control space 1003 where the control panel 3000 is located toward the power storage space 1002 where the battery rack 2000 is located. The first cable 3100 may be pulled out from the upper part of the control panel 3000. An opening through which the first cable 3100 passes may be located at the upper part of the control panel 3000 or its periphery.

The first cable 3100 may be located at the upper part of the enclosure 1001. The first cable 3100 extends upward from the upper part of the control panel 3000 and extends from one side to the other side within the upper part of the enclosure 1001, thereby approaching to each control unit 5100 located at the uppermost end of the battery rack 2000. Here, the space where the first cable 3100 extends for connecting the control panel 3000 and the battery rack 2000 may be referred to as a first power distribution space 1004. The first power distribution space 1004 may be located at the upper part of the enclosure 1001. Considering the position of the first cable 3100, the first cable 3100 may also be referred to as a roof cable.

Conventionally, a busbar 310 or the like was provided instead of the first cable 3100 of the present embodiments. Therefore, conventionally, the battery rack 2000 was mainly arranged inside the enclosure 1001, and then the battery rack 2000 and the busbar 310 were electrically connected through a welding process at the upper part of the battery rack 2000. However, since the first cable 3100 is utilized in the present embodiments, a welding process or the like is not necessary, and an electrical connection can be formed more easily. Additionally, since other structures for insulating the busbar 310 are omitted, the space inside the enclosure 1001 can be utilized more efficiently.

Meanwhile, a plurality of first cables 3100 extending to the battery rack 2000 are located in the first power distribution space 1004, and therefore, when the position of the first cables 3100 is not arranged in advance, twists or the like may occur between the plurality of first cables 3100. Furthermore, such twists or the like between the first cables 3100 may cause ignition or malfunction of the battery enclosure 1000. However, the battery enclosure 1000 of the present embodiments may be provided with a cable tray 3130 on which the first cable 3100 is mounted, thereby minimizing the above-mentioned problems.

Referring to FIG. 17, the cable tray 3130 may be located in the first power distribution space 1004. The first cable 3100 may be mounted on the cable tray 3130. The first cable 3100 can be effectively organized through the cable tray 3130, thereby facilitating the maintenance and repair of the battery enclosure 1000.

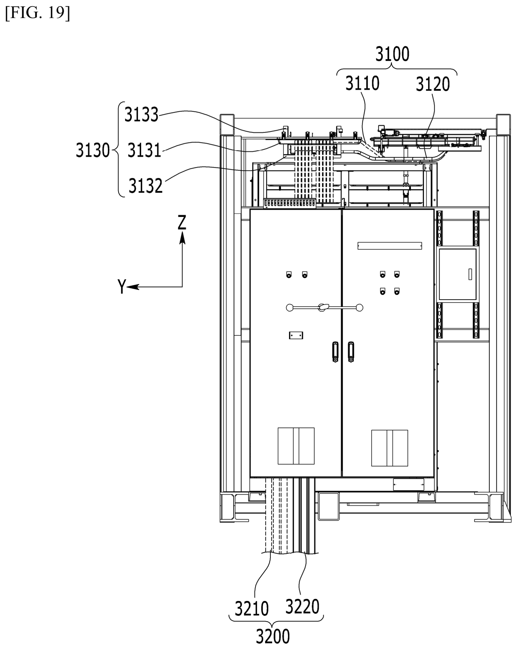

Referring to FIG. 19, the cable tray 3130 can have a two-stage structure. The cable tray 3130 may include an upper end tray 3131, a lower end tray 3132, and a bracket 3133 supporting them. A cathode cable 3110 may be located on one of the upper end tray 3131 and the lower end tray 3132, and an anode cable 3120 may be located on the other.

One of the plurality of cathode cables 3110 and one of the plurality of anode cables 3120 located on the cable tray 3130 may be connected to respective battery rack 2000 or sub-rack 2001. Here, the plurality of cathode cables 3110 and/or the plurality of anode cables 3120 located on respective trays 3131 and 3132 may be located side by side along the depth direction (Y-axis direction) of the enclosure 1001.

Among the plurality of cathode cables 3110 and/or anode cables 3120 located side by side along the depth direction (Y-axis direction), as the cable is located closer to the front side (-Y-axis direction), it may be connected to the battery rack 2000 or sub-rack 2001 located closer to the control panel 3000. In other words, the cathode cable 3110 and/or anode cable 3120 closest to the first door 1210 may be connected to the battery rack 2000 or sub-rack 2001 located closest to the control panel 3000. In addition, as the cable is located closer to the rear side (+Y-axis direction), it may be connected to the battery rack 2000 or sub-rack 2001 located farther from the control panel 3000. In other words, the cathode cable 3110 and/or the anode cable 3120 furthest from the first door 1210 may be connected to the battery rack 2000 or sub-rack 2001 located furthest from the control panel 3000. This may be because the first cable 3100 is connected to the front surface of the battery rack 2000 or sub-rack 2001. Therefore, if the first cable 3100 is connected to the rear surface of the battery rack 2000 or sub-rack 2001, the above-mentioned connection positions may be reversed.

In this way, the cathode cable 3110 and the anode cable 3120 are arranged up and down by the cable tray 3130, so that crosstalk between the first cables 3100 may be prevented. In addition, since the positions of the cathode cable 3110 and the anode cable 3120 are determined in advance, the connection between the first cable 3100 and the battery rack 2000 can be made easier.

In FIG. 19, the cathode cable 3110 is shown to be located in the upper end tray 3131, and the anode cable 3120 is shown to be located in the lower end tray 3132. But without being limited thereto, the cathode cable 3110 may be located at the lower end, and the anode cable 3120 may be located at the upper end.

On the other hand, in the above description, the cathode cable 3110 and the anode cable 3120 are located in the upper end tray 3131 and the lower end tray 3132 of the cable tray 3130, respectively, but are not limited thereto.

For example, the cathode cable 3110 and the anode cable 3120 may be located together in the upper end tray 3131, and the cathode cable 3110 and the anode cable 3120 may be located together in the lower end tray 3132. In this case, the cathode cable 3110 may be located in one of the front and rear sides of respective trays 3131 and 3132, and the anode cable 3120 may be located in the other. In addition, the cathode cable 3110 and the anode cable 3120 located on the upper end tray 3131 may be connected to a battery rack 2000 or a sub-rack 2001 located at a relatively long/short distance, and the cathode cable 3110 and the anode cable 3120 located on the lower end tray 3132 can be connected to a battery rack 2000 or a sub-rack 2001 located at a relatively short/long distance.

Referring again to FIG. 20, when the energy storage system 1 of the present embodiments includes two or more battery enclosures 1000, the control cabinet 4000 can be connected in parallel with a plurality of battery enclosures 1000. In other words, each battery enclosure 1000 can be individually connected to the control cabinet 4000.

On the other hand, in the conventional structure, the control cabinet 4000 is connected in series with a plurality of battery enclosures 1000. In the conventional structure, the control cabinet 4000 is connected to one of the battery enclosures 1000, the battery enclosure 1000 connected to the control cabinet 4000 is connected to the adjacent battery enclosure 1000, and the connected battery enclosure 1000 is again connected to the adjacent battery enclosure 1000, so that an electrical connection is formed within the energy storage system 1.

However, since the electrical connection between the battery enclosures 1000 must be formed after all the battery enclosures 1000 are fixed to the installation surface, there is a problem that the installation time and complexity increase. In addition, the connection between the battery enclosures 1000 is mainly formed in the upper area close to the ceiling, but it is not easy for the operator to perform the operation in the upper area of the battery enclosure 1000, which causes a problem that the fatigue and difficulty of the operation are high. Furthermore, in addition to those shown in the figure, the battery enclosure 1000 must be provided with a separate communication connection structure or power connection structure, etc., and such a connection structure can be mainly formed in the lower area close to the bottom surface of the battery enclosure 1000. Therefore, in the conventional structure, there is a hassle that the operator has to further perform construction on the ceiling portion in addition to the construction on the bottom portion of the battery enclosure 1000.

Furthermore, the battery enclosure 1000 is large in size and very heavy, and therefore, after the battery enclosure 1000 is located once, it is no longer easy to move it. Therefore, in order to connect a plurality of battery enclosures 1000 to each other in a site, not only detailed process design and high skill of an operator are required, but also a lot of time and cost may be required. However, actually, it is not easy to accurately locate the battery enclosure 1000 in a predetermined position, so that the distance between the battery enclosures 1000 whose installation has been completed may not be constant. When the distance between the battery enclosures 1000 is not constant in this way, it may be more difficult to form a connection between adjacent battery enclosures 1000.

Moreover, the conventional battery enclosure can have a structure in which the busbar 310 or the conductive member connected to the busbar 310 passes through the enclosure and extends to the outside. Therefore, since an opening is formed at the upper part of the battery enclosure 1000, there is a problem that it is difficult to completely seal the enclosure.

However, the energy storage system 1 of the present embodiments can solve the above-mentioned problems by forming the electrical connection between the control cabinet 4000 and the multiple battery enclosures 1000 by a parallel connection rather than a serial connection. The battery enclosure 1000 can be individually connected to the control cabinet 4000 by the second cable 3200 extending from the control cabinet 4000, through which the installation process of the energy storage system 1 is simplified, and the installation time can be shortened. The second cables 3200 will be described in more detail below. In addition, each battery enclosure 1000 is connected in parallel with the control cabinet 4000, and therefore, when an abnormality occurs in one of the plurality of battery enclosures 1000, the corresponding battery enclosure 1000 can be quickly cut off or removed from the control cabinet 4000, thereby making power management easier.

Moreover, in the present embodiments, a direct electrical connection may not be formed between two adjacent battery enclosures 1000. Thus, conventionally, the busbar 310 or a member connected thereto had to be exposed to the outside of the enclosure 1001, whereas in the present embodiments, the first cable 3100 may not be exposed to the outside. This complements the airtightness of the enclosure 1001, and makes it easier to manage the enclosure 1001.

Meanwhile, the second cable 3200 may be for connecting the battery enclosure 1000 to an external electrical device, such as the control cabinet 4000. The second cable 3200 may extend from one side of the battery enclosure 1000 to the outside or may extend from an external device to one side of the battery enclosure 1000.

The second cable 3200 may include a cathode cable 3210 and an anode cable 3220. One end of each of the cathode cable 3210 and the anode cable 3220 may be connected to a control cabinet 4000, and the other end may be connected to a control panel 3000 of a battery enclosure 1000, through which each battery enclosure 1000 may be connected in parallel with the control cabinet 4000. The cathode cable 3210 and the anode cable 3220 included in the second cable 3200 may be formed in a plural number. Each cathode cable 3210 and anode cable 3220 may be connected to one battery enclosure 1000.

At least a part of the second cable 3200 may be located at the lower part of the enclosure 1001. The second cable 3200 may extend downward from one side of the control cabinet 4000, then extend toward the battery enclosure 1000 from the lower side of the installation surface, and then extends upward again, thereby approaching to the control panel 3000 inside the battery enclosure 1000. The second cable 3200 may be pulled into the lower part of the control panel 3000. For this purpose, an opening through which the second cable 3200 passes may be located at the lower part of the control panel 3000 or its periphery. As illustrated in FIG. 17, the space through which the second cable 3200 extends for connecting the control panel 3000 and the control cabinet 4000 may be referred to as a second power distribution space 1005. The second power distribution space 1005 may include at least a part of the lower part of the enclosure 1001. In this way, the second cable 3200 may extend from the lower side of the installation surface, thereby being able to be protected from the external environment. Considering the position of the second cable 3200, the second cable 3200 may also be referred to as a ground cable.

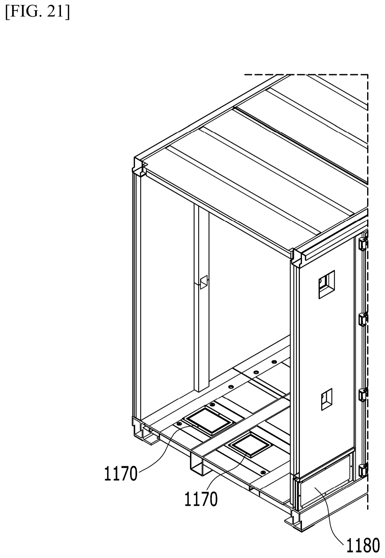

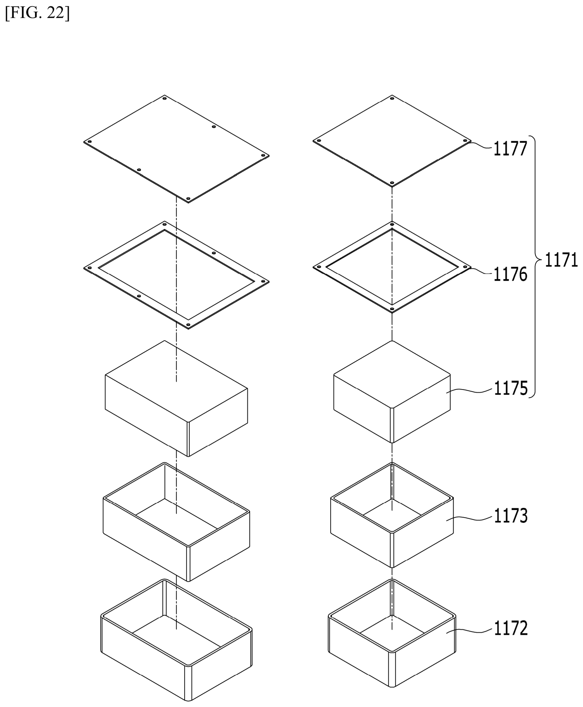

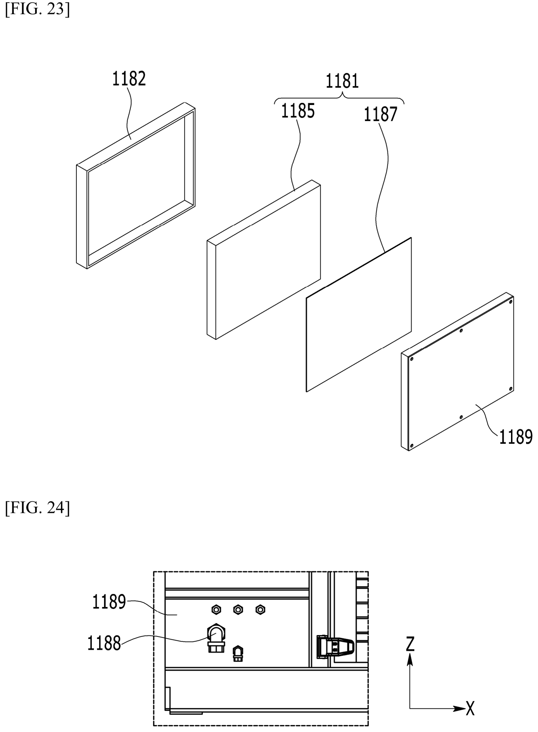

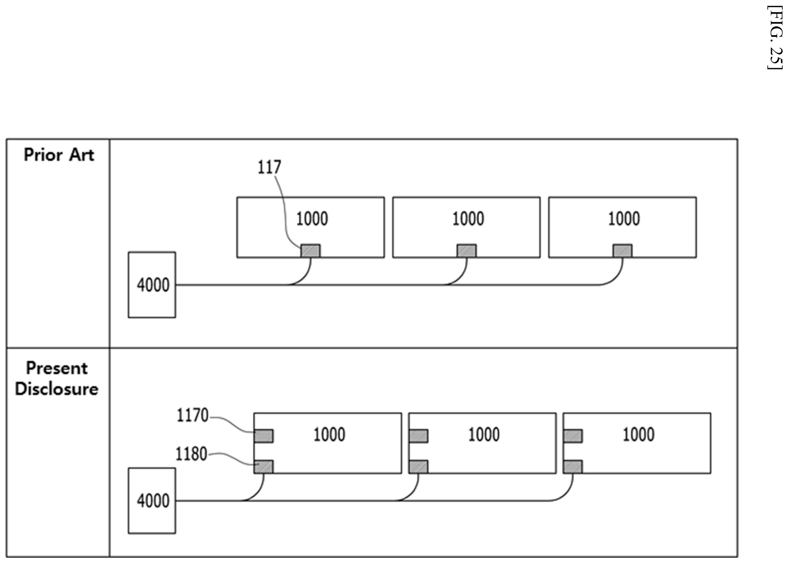

FIG. 21 is an enlarged view of one side of an enclosure 1001 included in the battery enclosure 1000 according to FIG. 2. FIGS. 22 and 23 are exploded perspective views of a closing unit for closing an opening of a battery enclosure 1000 according to FIG. 2. FIG. 24 is a modified embodiment of the closing unit according to FIG. 23. FIG. 25 is a diagram comparing the connection between battery enclosures according to certain embodiments of the present disclosure with the prior art.

Referring to FIGS. 21 to 25, the battery enclosure 1000 of the present embodiments may include openings 1170 and 1180 through which a second cable 3200 passes.

The openings 1170 and 1180, which include a first opening 1170 and a second opening 1180, may be for connecting the inside and outside of the battery enclosure 1000. The openings 1170 and 1180 may be for a second cable 3200 that connects a control panel 3000 and a control cabinet 4000. The openings 1170 and 1180 may be located adjacent to the control panel 3000 to which the second cable 3200 is connected. The openings 1170 and 1180 may be for communicating the control space 1003 with the second power distribution space 1005. The openings 1170 and 1180 may be located in the control space 1003 or the second power distribution space 1005. Alternatively, the openings 1170 and 1180 may be located between the control space 1003 and the second power distribution space 1005.

The first opening 1170 may be located on one surface of the enclosure 1001, and the second opening 1180 may be located on the other surface of the enclosure 1001. The one surface where the first opening 1170 is formed and the other surface where the second opening 1180 is formed may be perpendicular to each other. The first opening 1170 may be located on the first surface of the control space 1003, and the second opening 1180 may be located on the second surface of the control space 1003 perpendicular to the first surface. Specifically, the first opening 1170 may be formed on the lower surface of the enclosure 1001, i.e., the base 1100. The second opening 1180 may be formed on the side surface of the enclosure 1001, i.e., the front surface or the rear surface. Here, the number of the first opening 1170 or the second opening 1180 may be one or two or more. In the case of two or more, the degree of freedom in connecting the second cable 3200 to the control panel 3000 may be further improved. For example, the cathode cable 3210 and the anode cable 3220 of the second cable 3200 can be pulled in or out separately into the two first openings 1170.

Meanwhile, as shown in FIG. 25, the conventional battery enclosure 1000 also includes such an opening 1170. However, in the conventional structure such as the prior art literature 2, the control panel 3000 of the battery enclosure 1000 or a similar configuration is located in the center, so that the position and number of openings are limited. For example, in the conventional structure, the opening 1170 can be formed only on the lower surface of the enclosure 1001, and a structure such as the second opening 1180 of the present embodiments, which is located on the front surface or the rear surface of the enclosure 1001, could not be formed.

Furthermore, since the second cable 3200 must be bent in order to connect to the battery enclosure 1000, the second cable 3200 may have a curvature. However, if the position and number of the openings are limited, the curvature value of the second cable 3200 may be formed to be large according to the installation environment, which may cause malfunction of the battery enclosure 1001 or breakage of the second cable 3200.

However, in the present embodiments, since the control panel 3000 is located on one side of the battery enclosure 1000, the openings 1170 and 1180 may be formed on different sides of the enclosure 1001, respectively. Since the openings 1170 and 1180 are formed in a plural number, the operator can select one of the first openings 1170 and the second openings 1180 and dispose the second cable 3200 when installing the battery enclosure 1000. Thereby, compared to the conventional structure, the structure of the present embodiments can improve the installation efficiency of the operator. In addition, the curvature of the second cable 3200 may vary according to the position of the openings 1170 and 1180 selected by the operator, thereby preventing breakage of the second cable 3200.

Meanwhile, according to the present embodiments, since the openings 1170 and 1180 are formed in a plural number, it may be preferable to seal the openings 1170 and 1180 that are not used after the installation of the battery enclosure 1000 is completed. Therefore, the battery enclosure 1000 of the present embodiments may include a first closing unit 1171 for sealing the first opening 1170 and/or a second closing unit 1181 for sealing the second opening 1180. The first closing unit 1171 and the second closing unit 1181 will be described in more detail below.

As shown in FIG. 22, boxes 1172 and 1173, which include first boxes 1172 and a second box 1173, may be located in the first opening 1170 of FIG. 21. The boxes 1172 and 1173 may be for protecting the second cable 3200 passing through the first opening 1170. The boxes 1172 and 1173 may have a square tubular shape, and each surface of the boxes 1172 and 1173 may be located so as to surround the second cable 3200, thereby protecting the second cable 3200 from the external environment.

In the present embodiment, the boxes 1172 and 1173 may include a first box 1172 and a second box 1173. However, alternatively, it is also possible to provide only one of the first box 1172 and the second box 1173.

On the other hand, the boxes 1172 and 1173 may not be a configuration included in the first closing unit 1171. In other words, the boxes 1172 and 1173 may be configured to be included in the base 1100 of the enclosure 1001, and may be provided in a state coupled to the edge of the first opening 1170. Therefore, even when the first opening 1170 is used and the second cable 3200 passes through the first opening 1170, the boxes 1172 and 1173 may be located in the first opening 1170.

Here, the boxes 1172 and 1173 may include four surfaces forming a square tubular shape. Further, according to the design, the boxes 1172 and 1173 may have the form in which five surfaces are closed in addition to one surface corresponding to the opening. In this case, when installing the battery enclosure 1000, the boxes 1172 and 1173 may be formed with a hole for passing through the second cable 3200 may be formed in the boxes 1172 and 1173.

However, according to the embodiments, the boxes 1172 and 1173 may not be configured to be included in the base 1100. The boxes 1172 and 1173 may be provided for stably seal the first opening 1170, and may be included in the first closing unit 1171. In addition, according to the embodiments, only the first box 1172 may be basically provided in the enclosure 1001, and the second box 1173 may be selectively provided. In this case, the second box 1173 may be for preventing a play between the first box 1172 and the first closing unit 1171, and the second box 1173 may be included in the first closing unit 1171.

The first closing unit 1171 for sealing the first opening 1170 may include a heat insulating material 1175, a sealing pad 1176, and a first cover 1177. In addition, as described above, the first closing unit 1171 may include one or both of the first box 1172 and the second box 1173.

The heat insulating material 1175 may be for sealing the internal space of the boxes 1172 and 1173. The heat insulating material 1175 may be for preventing condensation, etc. that may occur according to the temperature difference between the interior and exterior space of the enclosure 1001. The heat insulating material 1175 may be prepared from a material having low thermal conductivity.

The sealing pad 1176 may be for improving the sealing level of the first opening 1170. The sealing pad 1176 may be located between one surface of the base 1100 where the first opening 1170 is formed and the first cover 1177. The sealing pad 1176 may be provided to cover a predetermined edge area extending radially from the edge of the first opening 1170. The sealing pad 1176 mat be configured to tightly adhere the edge of the first opening 1170 and the first cover 1177, so that no gap is formed in the periphery of the first closing unit 1171. For this purpose, the sealing pad 1176 may be prepared from a material having elasticity.

The first cover 1177 may be for closing one side of the first opening 1170. The first cover 1177 can cover the first opening 1170 on one surface of the base 1100. The size of the first cover 1177 may be larger than the size of the first opening 1170.

The first closing unit 1171 can be coupled with the base 1100 through a fastening member such as a bolt. Specifically, for example, the first closing unit 1171 is located on the first opening 1170, and then a bolt is inserted into the edge of the first cover 1177, so that the first cover 1177 and the base 1100 can be coupled.

The second closing unit 1181 for sealing the second opening 1180 may include a heat insulating material 1185 and a second cover 1187. Here, the general contents of the heat insulating material 1185 and the second cover 1187 can be explained based on the contents of the heat insulating material 1175 and the first cover 1177 of the first closing unit 1171 and thus, a detailed description thereof is omitted.

Additionally, as shown in FIG. 23, a third box 1182 may be provided in the second opening 1180. The contents of the third box 1182 overlap with those of the above-mentioned boxes 1172 and 1173, and thus, a detailed description thereof will be omitted. As mentioned above, the third box 1182 may be configured to be included in the base 1100 of the enclosure 1001, or may be configured to be included in the second closing unit 1181.

In FIG. 23, the second closing unit 1181 is shown as not including the same structure as the sealing pad 1176 included in the first closing unit 1171. However, without being limited thereto, and the second closing unit 1181 can also be provided with a structure similar to the sealing pad 1176.

Since the second opening 1180 is located at a front surface or a rear surface of the enclosure 1001, it may be preferable that it is more completely sealed than the first opening 1170. For this purpose, a second outer cover 1189 may be located at an outer part of the second cover 1187. The second outer cover 1189 may be provided with a material identical or similar to one surface of the enclosure 1001, thereby being integrated with the enclosure 1001. The second outer cover 1189 is provided at the second opening 1180 in this way, so that the second opening 1180 can be sealed more stably. Furthermore, the first opening 1170 may also be provided with such an outer cover in accordance with the design.

Meanwhile, even when the first opening 1170 or the second opening 1180 is used, it may be preferable to close an area other than the space where the second cable 3200 is located among the openings 1170 and 1180 for sealing the enclosure 1001. Therefore, even when the first opening 1170 or the second opening 1180 is used, the whole or a part of the first closing unit 1171 and the second closing unit 1181 may be located in the first opening 1170 or the second opening 1180.

Furthermore, such openings 1170 and 1180 in use may be provided with further components such as a second outer cover 1189 in addition to the closing units 1171 and 1181.

As shown in FIG. 24, when the second opening 1180 is used, the second outer cover 1189 may include a conduit 1188 that guides the position of the second cable 3200. The conduit 1188 may guide the second cable 3200 located on an outer side of the enclosure 1001 to a downstream side. The second cable 3200 may be protected through the conduit 1188, and the second opening 1180 may be effectively sealed. In addition, even when the first opening 1170 is used, a first external cover may be provided, which may also include a conduit or a similar structure.

Next, the dimensions of the battery enclosure according to the present embodiments will be described.

In the conventional battery enclosure 1000, the enclosure 1001 mainly used a typical 20 ft or 40 ft enclosure. However, there is a limitation to adjusting the size of the battery rack 2000 and the control panel 3000 included in the battery enclosure 1000, which can increase the proportion of dead space even if the internal configuration is optimized. Therefore, the battery enclosure 1000 of the present embodiments may use a separately designed enclosure 1001 in addition to a standardized enclosure.

More specifically, when the product is distributed in units of battery enclosures 1000, it may be advantageous for the enclosure 1001 to minimize its volume and weight in terms of transportation. In addition, the enclosure 1001 may minimize the volume and weight and at the same time maximize the number of batteries 5000 mounted therein, so that increasing the energy density may be advantageous in terms of power capacity.

Thereby, in the present embodiments, the dead space is minimized through optimization of the internal space, thereby reducing that the length value LT, the depth value DT and the height value HT of the enclosure 1001.

First, in the present embodiments, the control panel 3000 is rotated by 90 degrees and arranged, so that the size occupied by the control panel 3000 in the longitudinal direction (X-axis direction) of the enclosure 1001 can be minimized, and the length value LT of the enclosure 1001 can be minimized.

Second, the air conditioner 1300 is provided in a form that is coupled to the door 1200, so that the depth value DT of the enclosure 1001 can be minimized.

Finally, the battery enclosure 1000 of the present embodiments employs cables 3100 and 3200 instead of the busbar 310 as a conductive member for electrical connection, so that the insulation and fixing structure of the busbar 310 is eliminated and the weight occupied by the power distribution structure in the height value HT of the enclosure 1001 can be minimized.

More specific examples of the dimensions of the enclosure 1001 will be described below. The dimensions of the enclosure 1001 described below may be described based on the size of the battery 5000. For convenience of explanation, the size of the battery 5000 on the X-axis may be referred to as BLT, the size on the Y-axis may be referred to as BDT, and the size on the Z-axis may be referred to as BHT.

**1) Length value (LT)**

The length value LT of the enclosure 1001 may be expressed as follows:

$$\text{(LT) = [Size occupied by the power storage space 1002] + [Size occupied by the skeletal structure of the enclosure 1001] + [Size occupied by the control space 1003]} \quad \text{Equation (1)}$$

In the present embodiments, a battery rack 2000 is located in the power storage space 1002, and the battery rack 2000 may include batteries 5000 arranged in columns in each sub-rack 2001. Therefore, the size occupied by the power storage space 1002 in the longitudinal direction (X-axis direction) may be described as follows.

$$\text{[Size occupied by the power storage space 1002] = [(BLT)*(Number of columns included in all battery racks 2000)*(A1)])} \quad \text{Equation (1-1)}$$

Here, the number of columns included in the battery rack 2000 may mean the total number of batteries 5000 that can be arranged in the longitudinal direction of the enclosure 1001. The number of columns included in the battery rack 2000 may be 10 or more. Preferably, the number of columns included in the battery rack 2000 may be 10 or more and 12 or less.

Here, the separation space compensation value A1 may be a weighted value in consideration of the thickness of the columns 2100 and 2200, etc. of the battery rack 2000 and the separation distance between the battery racks 2000 in addition to the length value BLT of the battery 5000. This separation distance and the thickness of the frame may be proportional to the total number of columns formed in all battery racks 2000. Therefore, in Equation 1-1, the weighted value, i.e., the separation space compensation value A1, can be applied to the length of the battery 5000 and the number of all columns included in all battery racks 2000 to thereby calculate the size in the longitudinal direction (X-axis direction) occupied by the power storage space 1002.

The separation space compensation value A1 can be selected from 1.1 to 1.5. Specifically, for example, when the length value BLT of the battery 5000 is 400 cm and the total number of columns is 11, the size occupied by the power storage space 1002 in the longitudinal direction (X-axis direction) may be (400cm)*(11)*(1.1) to (400cm)*(11)*(1.5).

In addition, the enclosure 1001 may include an external structure such as a main column 1190 in addition to a power storage space 1002 including a battery rack 2000 and a control space 1003 including a control panel 3000. Therefore, when calculating the length value LT of the enclosure 1001, a value for the skeletal structure may need to be considered.

$$[\text{Size occupied by the skeletal structure of the enclosure 1001}] = (BLT)*(B1) \dots$$

$$\text{Equation (1-2)}$$

Here, the outer shape structure compensation value B1 may be a weighted value in consideration of the skeletal structure such as the main column 1190 and other columns. The size occupied by the outer shape structure in the longitudinal direction (X-axis direction) may be expressed based on the BLT, and may be calculated by multiplying the BLT by B1.

The outer shape structure compensation value B1 may be selected from 0.6 to 1.4. Specifically, for example, when the length value BLT of the battery 5000 is 400 cm, the size occupied by the outer shape structure in the longitudinal direction (X-axis direction) may be (400 cm)*(0.6) to (400 cm)*(1.4).

Meanwhile, the size occupied by the control space 1003 in the longitudinal direction (X-axis direction) may be expressed based on the length value (BLT) of the battery 5000 as follows. At this time, the control space 1003 may include the control panel 3000 and other spaces.

$$[\text{Size occupied by the control space 1003}] = (BLT)*(E1) \dots \text{Equation (1-3)}$$

Here, the space compensation value E1 represents the size of the control space 1003 where other electrical components other than the control panel 3000 are located based on the length value BLT of the battery 5000. E1 can be selected from 1.2 to 2.0. At this time, when compared to the size of a conventional control panel 3000, the E1 value applied to Equation 1-3 being small may be because the control panel 3000 of the present embodiments is arranged toward the left side or the right side of the enclosure 1001.

**Therefore, the length value according to the present embodiments may be expressed as follows.**

**(LT) = [(BLT) * {(Number of columns included in all battery racks) * (A1) + (B1) + (E1)}]**         Equation (1-4)

**2) Height value (HT)**

On the other hand, the height value HT of the enclosure 1001 may be expressed as follows.

**(HT) = [Size occupied by battery rack 2000 in the height direction] + [Size occupied by the skeletal structure of the enclosure 1001] + [Size of first power distribution space 1004 required for the arrangement of the first cable 3100]**         Equation (2)

Here, the height of the battery rack 2000 may be proportional to the number of batteries 5000 that can be stacked on the battery rack 2000. In addition, since the battery rack 2000 includes a control unit 5100, this must be further taken into consideration.

Therefore, the size occupied by the battery rack 2000 in the height direction (Z-axis direction) may be explained as follows.

**[Size occupied by battery rack 2000 in the height direction] = [(BHT)*{(Maximum number of the batteries 5000 that can be mounted in one column)+1}*(A2)]**         Equation (2-1)

Here, the maximum number of batteries 5000 that can be mounted in one column may mean the total number of batteries 5000 that can be arranged in the height direction of the enclosure 1001. Adding 1 to the maximum number of batteries 5000 that can be mounted in the battery rack 2000 is in consideration of the control unit 5100. The maximum number of batteries 5000 that can be stacked in a column of the battery rack 2000 may be 16 or more. Preferably, the maximum number of batteries 5000 that can be stacked in a column of the battery rack 2000 may be 16 or more and 18 or less.

Here, the separation space compensation value A2 may be a weighted value in consideration of the structure of the battery rack 2000 and the separation distance between the batteries 5000 according to the height value BHT of the battery 5000. The separation space compensation value A2 may be selected from 1.0 to 1.3.

In addition, the value for the skeletal structure such as the base 1100 of the enclosure 1001 may be expressed based on the height value BHT of the battery 5000 as follows:

$$\text{[Size occupied by the skeletal structure of the enclosure 1001] = (BHT)*(B2) ... Equation (2-2)}$$

Here, B2 may be from 2 to 4.

Further, the size of the first power distribution space 1004 may be expressed based on the height value BHT of the battery 5000 as follows:

$$\text{(Size of the first power distribution space 1004) = (BHT)*(E2) ... Equation (2-3)}$$

Here, the space compensation value E2 may represent the size of the first power distribution space 1004 based on the height value BHT of the battery 5000.

E2 may be selected from 1 to 3.

Therefore, the height value HT of the enclosure 1001 may be expressed as follows.

$$\text{(HT) = [(BHT)* [{(Maximum number of the batteries 5000 that can be mounted in one column) +1}*(A2)+(B2)+(E2)]]} \qquad \text{Equation (2-4)}$$

**3) Depth value (DT)**

On the other hand, the depth value DT of the enclosure 1001 may be expressed as follows.

$$\text{(DT) = [Size occupied by battery rack 2000 in the depth direction] + [Size occupied by skeletal structure including air conditioner 1300, etc.]} \qquad \text{Equation (3)}$$

Here, the size occupied by the battery rack 2000 in the depth direction (Y-axis direction) may be explained as follows.

$$\text{[Size occupied by battery rack 2000 in the depth direction] = (BDT)*(Number of columns included in battery rack 2000)*(A3)} \qquad \text{Equation (3-1)}$$

Here, the number of columns included in the battery rack 2000 may mean the total number of batteries 5000 that can be arranged in the depth direction of the enclosure 1001. The number of columns included in the battery rack 2000 may be 1 or 2, and preferably 1.

Here, the separation space compensation value A3 may be a weighted value in consideration of the depth value BDT of the battery 5000, the thickness of the columns 2100 and 2200 of the battery rack 2000, and the separation distance between the battery rack 2000 and the enclosure 1001. The separation space compensation value A3 may be from 1.0 to 1.1.

Further, the size occupied by the skeletal structure of the air conditioner 1300 etc. may be expressed as follows.

$$\text{[Size occupied by the skeletal structure of air conditioner 1300, etc.] = (BDT)*(B3) ... Equation (3-2)}$$

Here, B3 may be for representing the size occupied by the structure other than the battery 5000 in the depth direction (Y-axis direction) as the depth value BDT of the battery 5000. B3 may be from 0.2 to 0.8.

Therefore, the depth value DT of the enclosure 1001 may be expressed as follows.

$$\text{(DT) = [(BDT)*(the number of columns included in battery rack 2000)*(A3)+(B3)] ... Equation (3-3)}$$

Meanwhile, the 20ft or 40ft enclosure value used in the typical energy storage system 1 is as follows.

20 ft enclosure: 6,096 mm(20 ft) x 2,438 mm(8 ft) x 2,590 mm(8 ft 6 inches)

40 ft enclosure: 12,192 mm(20 ft) x 2,438 mm(8 ft) x 2,590 mm(8 ft 6 inches)
20 ft HC enclosure: 6,096 mm(20 ft) x 2,438 mm(8 ft) x 2,895 mm(9 ft 6 inches)
40 ft HC enclosure: 12,192 mm(20 ft) x 2,438 mm(8 ft) x 2,895 mm(9 ft 6 inches)

Hereinafter, the four values mentioned above will be referred to as "standard enclosure values". In addition, the above-mentioned four values may be classified and referred to as a "20 ft standard enclosure" or a "40 ft standard enclosure" according to the length value. Therefore, '20 ft standard enclosure' or '40 ft standard enclosure' may be interpreted as including both general standards and HC standards.

On the other hand, the dimensions of the enclosure 1001 of the present embodiments may have the following values.

$$6{,}096 \text{ mm} \leq LT \leq 8{,}696 \text{ mm}$$

$$1{,}638 \text{ mm} \leq DT \leq 2{,}438 \text{ mm}$$

$$2{,}390 \text{ mm} \leq HT \leq 3{,}490 \text{ mm}$$

Here, the larger the length value LT, the more batteries 5000 can be loaded into the enclosure 1001. Therefore, if the length value LT of the enclosure 1001 is less than 6,096 mm, the power capacity of the battery enclosure 1000 may not be sufficient. Further, if the length value LT of the enclosure 1001 exceeds 8,696 mm, the battery 5000 may be loaded in large quantities, but there is a problem that the volume and weight values of the enclosure 1001 increase excessively, which results in an increase in transportation costs.

Here, as the depth value DT is smaller, the volume of the enclosure 1001 may be reduced. This may be because a larger space disappears when the depth value DT is reduced than when the length value LT and height value HT are reduced. Therefore, in the enclosure 1001 used for the battery enclosure 1000, the smaller the depth value DT may be advantageous. Thus, the enclosure 1001 of the present embodiments may have a depth value equal to or smaller than the standard enclosure size, but if the depth value DT is less than 1,638 mm, it may be difficult to load the battery 5000. Therefore, it may be preferable for the depth value DT to have a value of 1,638 mm or more and 2,438 mm or less.

Here, as the height value HT is larger, the more batteries 5000 may be vertically stacked, and as sufficient upper space is formed, electrical connections inside the battery enclosure 1000 can be easily formed. Therefore, if the height value HT of the enclosure 1001 is less than 2,390 mm, there is a problem that electrical connections inside the battery enclosure 1000 are difficult or the number of batteries 5000 stacked is limited.

However, if the height value HT is too large, the transportation costs may increase as the overall volume of the enclosure 1001 increases. Moreover, if the height value HT is too large, vertical stacking of the battery enclosure 1000 within the transportation space may be difficult during transportation, which may cause a problem that the transportation cost increases. Considering these points, it may be preferable that the height value HT of the enclosure 1001 be similar to the standard enclosure value, and if the height value HT of the enclosure 1001 exceeds 3,490 mm, the transportation cost may increase excessively as described above.

When comparing the enclosure 1001 of the present embodiments with the 20 ft or 40 ft enclosure value, the depth value DT of the enclosure 1001 of the present embodiments may be equal to or smaller than the standard enclosure.

In the enclosure 1001, the front surface and the rear surface may have larger areas than the other surfaces of the enclosure 1001, and therefore, when the depth value DT is reduced, the volume of the enclosure 1001 may be effectively reduced. In this way, the enclosure 1001 of the present embodiments may have a volume value equal to or smaller than the 20 ft or 40 ft standard enclosure by reducing the depth value DT compared to the conventional one.

In addition, the length value LT of the enclosure 1001 of the present embodiments may be equal to or greater than a 20 ft enclosure and less than a 40 ft enclosure. The depth value DT of the enclosure 1001 of the present embodiments is reduced compared to the conventional one, and therefore, even if the length value LT increases, it may have a volume value equal to or less than that of the conventional 20 ft enclosure. Therefore, compared to the conventional enclosure having the same volume, the enclosure 1001 of the present embodiments may be loaded with a greater number of batteries 5000.

In this way, the battery enclosure 1000 of the present embodiments includes an enclosure 1001 of optimized specifications and thus may be loaded with a greater number of batteries 5000 in the same space, thereby achieving the effect of reducing transportation costs.

Although the invention has been described in detail above with reference to preferred embodiments thereof, it will be appreciated by those skilled in the art that the scope of the present disclosure is not limited thereto, and various modifications and improvements can be made in these embodiments without departing from the principles and sprit of the

## EP 4 708 520 A1

invention, the scope of which is defined in the appended claims and their equivalents.

[Description of Reference Numerals]

1000: battery enclosure
1001: enclosure
1002: power storage space
1003: control space
1004: first power distribution space
1005: second power distribution space
1100: base
1200: door
1300: air conditioner
2000: battery rack
2001: sub-rack
3000: control panel
3100: first cable
3130: cable tray
3200: second cable
4000: control cabinet
5000: battery
5100: control unit

**Claims**

1. A battery enclosure comprising:

   an enclosure including a base fixed to an installation surface; and
   a battery rack being fixed to the base and configured to accommodate at least one battery,
   wherein the battery rack includes at least one column extending a vertical direction,
   wherein the base includes at least one horizontal beam and at least one vertical beam,
   wherein the horizontal beam includes a fixture configured to fix the battery enclosure to the installation surface, and
   wherein the fixture is provided at a position corresponding to a position of the column included in the battery rack.

2. The battery enclosure of claim 1, wherein a single fixture is provided on the horizontal beam.

3. The battery enclosure of claim 1, wherein the fixture provided on the horizontal beam is positioned apart from a center of the horizontal beam in a length direction.

4. The battery enclosure of claim 1, wherein the fixture includes a middle fixture provided on the horizontal beam and a corner fixture positioned adjacent to an end of the horizontal beam or an end of the vertical beam.

5. The battery enclosure of claim 4, wherein multiple corner fixtures are provided, and wherein the middle fixture is positioned between two corner fixtures.

6. The battery enclosure of claim 5, wherein the middle fixture is positioned closer to one of the two corner fixtures than to another one.

7. The battery enclosure of claim 4, wherein the battery rack includes multiple columns in which batteries are vertically stacked.

8. The battery enclosure of claim 4, wherein the middle fixture includes a bottom surface in which a hole is formed, and a support surface extending from an edge of the bottom surface to the horizontal beam.

9. The battery enclosure of claim 4, wherein the corner fixture includes a bottom surface in which a hole is formed, and an edge of the bottom surface is positioned adjacent to the horizontal beam or the vertical beam.

10. The battery enclosure of claim 1, wherein the base includes a rack fixing beam positioned between two horizontal beams, and the column is fixed to the rack fixing beam.

11. The battery enclosure of claim 10, wherein a sub-vertical beam is positioned below the rack fixing beam, and wherein the sub-vertical beam is disposed perpendicular to the horizontal beam.

12. The battery enclosure of claim 1, wherein the horizontal beam includes a partition formed therein.

13. The battery enclosure of claim 12, wherein the base further includes a sub-vertical beam disposed perpendicular to the horizontal beam, and
wherein both ends of the sub-vertical beam are in contact with the partition of the horizontal beam.

14. The battery enclosure of claim 1, wherein the battery enclosure further includes a control panel configured to manage the battery rack, and
wherein the front surface of the control panel is disposed perpendicular to the front surface of the battery rack.

15. The battery enclosure of claim 1, further comprising:

an air conditioner configured to dissipate heat from the at least one battery,
wherein the air conditioner is provided in a state coupled to a door installed on the front surface of the battery rack to allow access to the battery rack.

16. The battery enclosure of claim 1, wherein a cable is installed in the battery enclosure as a conductive member for electrical connection.

17. An energy storage system comprising the battery enclosure of claim 1.

[FIG. 1]

[FIG. 2]

[FIG. 3]

[FIG. 4]

[FIG. 5]

[FIG. 6]

[FIG. 7]

[FIG. 8]

[FIG. 9]

[FIG. 10]

[FIG. 11]

[FIG. 12]

1140

1164

1120

[FIG. 13]

[FIG. 14]

[FIG. 15]

[FIG. 16]

[FIG. 17]

[FIG. 18]

[FIG. 19]

[FIG. 20]

EP 4 708 520 A1

39

[FIG. 21]

1170

1170

1180

[FIG. 22]

[FIG. 23]

[FIG. 24]

[FIG. 25]

# EP 4 708 520 A1

## INTERNATIONAL SEARCH REPORT

International application No.

**PCT/KR2024/018038**

### A. CLASSIFICATION OF SUBJECT MATTER

**H01M 50/262**(2021.01)i; **H01M 50/251**(2021.01)i; **H01M 50/204**(2021.01)i

According to International Patent Classification (IPC) or to both national classification and IPC

### B. FIELDS SEARCHED

Minimum documentation searched (classification system followed by classification symbols)

H01M 50/262(2021.01); F28F 13/00(2006.01); G06F 1/20(2006.01); H01M 10/48(2006.01); H01M 50/20(2021.01); H01M 50/204(2021.01); H01M 50/251(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리 (battery), 에너지 저장 시스템 (energy storage system), 빔 (beam), 고정 (fix), 랙 (rack), 지지 (support)

### C. DOCUMENTS CONSIDERED TO BE RELEVANT

| Category* | Citation of document, with indication, where appropriate, of the relevant passages | Relevant to claim No. |
|---|---|---|
| Y | US 2010-0165565 A1 (HELLRIEGAL, S. V.R. et al.) 01 July 2010 (2010-07-01)<br>See paragraphs [0026], [0028], [0032], [0052], [0059], [0066] and [0075]; and figures 3, 5 and 7a. | 1-17 |
| Y | KR 10-2023-0156488 A (LG ENERGY SOLUTION, LTD.) 14 November 2023 (2023-11-14)<br>See abstract; claim 15; paragraphs [0039], [0094], [0099] and [0114]; and figures 2, 3, 9 and 16. | 1-17 |
| Y | KR 10-2023-0112088 A (LG ENERGY SOLUTION, LTD.) 26 July 2023 (2023-07-26)<br>See paragraph [0261]; and figure 3. | 15 |
| A | KR 10-2023-0130210 A (KD POWER CO., LTD.) 12 September 2023 (2023-09-12)<br>See abstract; and claim 1. | 1-17 |
| A | KR 10-2416817 B1 (LG ENERGY SOLUTION, LTD.) 05 July 2022 (2022-07-05)<br>See abstract; and claim 1. | 1-17 |

☐ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **28 February 2025** | **28 February 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

EP 4 708 520 A1

## INTERNATIONAL SEARCH REPORT
### Information on patent family members

International application No.

**PCT/KR2024/018038**

| Patent document cited in search report | | | Publication date (day/month/year) | Patent family member(s) | | | Publication date (day/month/year) |
|---|---|---|---|---|---|---|---|
| US | 2010-0165565 | A1 | 01 July 2010 | CN | 103106179 | A | 15 May 2013 |
| | | | | CN | 103257952 | A | 21 August 2013 |
| | | | | CN | 103324601 | A | 25 September 2013 |
| | | | | US | 2012-0127656 | A1 | 24 May 2012 |
| | | | | US | 2012-0134104 | A1 | 31 May 2012 |
| | | | | US | 2012-0140415 | A1 | 07 June 2012 |
| | | | | US | 2012-0147552 | A1 | 14 June 2012 |
| | | | | US | 2012-0173894 | A1 | 05 July 2012 |
| | | | | US | 2015-0011152 | A1 | 08 January 2015 |
| | | | | US | 2015-0130352 | A1 | 14 May 2015 |
| | | | | US | 7990710 | B2 | 02 August 2011 |
| | | | | US | 8833094 | B2 | 16 September 2014 |
| | | | | US | 8842420 | B2 | 23 September 2014 |
| | | | | US | 8842430 | B2 | 23 September 2014 |
| | | | | US | 9116536 | B2 | 25 August 2015 |
| KR | 10-2023-0156488 | A | 14 November 2023 | AU | 2023-263905 | A1 | 05 December 2024 |
| | | | | CN | 118872134 | A | 29 October 2024 |
| | | | | EP | 4475306 | A1 | 11 December 2024 |
| | | | | KR | 10-2732024 | B1 | 18 November 2024 |
| | | | | WO | 2023-214847 | A1 | 09 November 2023 |
| KR | 10-2023-0112088 | A | 26 July 2023 | AU | 2023-208591 | A1 | 18 April 2024 |
| | | | | CN | 117678134 | A | 08 March 2024 |
| | | | | EP | 4379991 | A1 | 05 June 2024 |
| | | | | JP | 2025-502789 | A | 28 January 2025 |
| | | | | KR | 10-2706469 | B1 | 12 September 2024 |
| | | | | US | 2024-0347791 | A1 | 17 October 2024 |
| | | | | WO | 2023-140667 | A1 | 27 July 2023 |
| KR | 10-2023-0130210 | A | 12 September 2023 | None | | | |
| KR | 10-2416817 | B1 | 05 July 2022 | KR | 10-2019-0101263 | A | 30 August 2019 |

Form PCT/ISA/210 (patent family annex) (July 2022)

**REFERENCES CITED IN THE DESCRIPTION**

**Patent documents cited in the description**

- KR 1020230172422
- KR 1020240161894
- KR 1020230112086